(19) Europäisches Patentamt
European Patent Office
Office européen des brevets

(11) **EP 3 290 556 B1**

(12) **EUROPEAN PATENT SPECIFICATION**

(45) Date of publication and mention
of the grant of the patent:
**04.03.2020 Bulletin 2020/10**

(21) Application number: **16786569.0**

(22) Date of filing: **28.04.2016**

(51) Int Cl.:
*D04H 3/011* (2012.01)        *A47C 27/12* (2006.01)
*A47G 27/02* (2006.01)        *B68G 3/00* (2006.01)
*D04H 3/018* (2012.01)        *D04H 3/16* (2006.01)

(86) International application number:
**PCT/JP2016/063389**

(87) International publication number:
**WO 2016/175293 (03.11.2016 Gazette 2016/44)**

(54) **NET-LIKE STRUCTURE**

NETZARTIGE STRUKTUR

STRUCTURE DE TYPE FILET

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.04.2015   JP 2015091457**
**08.02.2016   JP 2016022102**
**01.04.2016   JP 2016074394**

(43) Date of publication of application:
**07.03.2018   Bulletin 2018/10**

(73) Proprietor: **Toyobo Co., Ltd.**
**Osaka-shi**
**Osaka 530-8230 (JP)**

(72) Inventors:
• **KOBUCHI, Shinichi**
**Osaka-shi**
**Osaka 530-8230 (JP)**
• **TANINAKA, Teruyuki**
**Otsu-shi**
**Shiga 520-0292 (JP)**
• **WAKUI, Hiroyuki**
**Otsu-shi**
**Shiga 520-0292 (JP)**
• **KURAMOTO, Takahiro**
**Osaka-shi**
**Osaka 530-8230 (JP)**
• **FUKUNISHI, Noriki**
**Osaka-shi**
**Osaka 530-8230 (JP)**
• **INOUE, Takuo**
**Tsuruga-shi**
**Fukui 914-8550 (JP)**
• **YASUI, Akifumi**
**Otsu-shi**
**Shiga 520-0292 (JP)**

(74) Representative: **Müller-Boré & Partner**
**Patentanwälte PartG mbB**
**Friedenheimer Brücke 21**
**80639 München (DE)**

(56) References cited:
EP-A1- 1 586 687      EP-A1- 1 665 957
EP-A1- 2 848 721      EP-A1- 2 966 206
EP-A1- 3 064 627      EP-A1- 3 064 628
EP-A1- 3 255 192      JP-A- S5 936 757
JP-A- H07 189 105     JP-A- H07 189 105

EP 3 290 556 B1

**Description**

The present invention relates to a net-like structure suitable for a net-like cushion material used for office chairs, furniture, sofas, beddings such as beds, seats for vehicles such as trains, automobiles, two-wheeled vehicles, baby buggies, child safety seats, and wheelchairs, and shock-absorbing mats such as floor mats and members for preventing collision and nipping, etc.

At present, as a cushion material used for furniture, beddings such as beds, and seats for vehicles such as trains, automobiles, and two-wheeled vehicles, a net-like structure is increasingly used. Japanese Patent Laying-Open No. H7-68061 (PTD 1) and Japanese Patent Laying-Open No. 2004-244740 (PTD 2) disclose methods for manufacturing a net-like structure. Net-like structures have merits, compared with foamed-crosslinked urethane, of having a comparable level of durability, being excellent in moisture and water permeability and air permeability, and being low in heat storage properties and therefore providing resistance against stuffiness. Moreover, net-like structures, made of thermoplastic resin, have other advantages of being easy in recycling, having no worry about residual agents, and being environmentally friendly. However, in these net-like structures, with some exceptions, there has been no concept of differentiating the front from the back, with the same cushioning feeling given whichever face is used.

A net-like structure has unique cushioning performance, but has found difficulty in changing the cushioning performance by itself. To address this problem, Japanese Patent Laying-Open No. H7-189105 (PTD 3) discloses a different-fineness net-like structure and a method for manufacturing the same. This structure is constituted of a base layer responsible for vibration absorption and retention of body shape and a surface layer responsible for properties of being soft and ensuring uniform pressure dispersion. In this way, the layers play different roles, aiming to improve comfort to sit on when the user sits from the side of the surface layer. However, no consideration has been made for use of sitting from both sides, from the side of the surface layer and from the side of the base layer. Compression durability is lower in the case of sitting from the side of the surface layer than in the case of sitting from the side of the base layer: i.e., compression durability is different between the case of sitting from the side of the surface layer and the case of sitting from the side of the base layer.

Net-like structures having different designs may be bonded together by adhesion, bound with a band, or integrated with a side cloth. This has however problems that the production cost is high and that the cushioning feeling may change by using an adhesive, causing a feeling of strangeness. In addition, there has been a problem that compression durability is greatly different between both faces.

PATENT DOCUMENT

PTD 1: Japanese Patent Laying-Open No. H7-68061
PTD 2: Japanese Patent Laying-Open No. 2004-244740
PTD 3: Japanese Patent Laying-Open No. H7-189105

EP 3 064 628 A1 discloses a fibrous network structure having compression durability.

EP 3 064 627 A1 discloses an elastic network structure with quietness and lightweight properties.

EP 3 255 192 A1 discloses a net-like structure having low resilience characteristics.

EP 2 966 206 A1 discloses a net-shaped structure having compression durability.

EP 1 665 957 A1 discloses a cushion material formed of a spring-structured resin-molded product, a manufacturing method for the cushion material, and a mold used for the manufacturing method.

EP 1 586 687 A1 discloses a spring-structured resin-molded product, and a method and device for forming a surface layer on the spring-structured resin-molded product.

In view of the problems of the background art described above, an object of the present invention is providing a net-like structure capable of imparting cushioning performance different between both faces, and having an effect that the difference in compression durability is small from whichever face pressure is applied.

After having devoted themselves to researches for solving the above problems, the present inventors have finally completed the present invention, which includes the followings.

[1] A net-like structure having a three-dimensional random loop bonded structure constituted of a thermoplastic elastomer continuous linear body that is either a polyester-based thermoplastic elastomer continuous linear body or a polyolefin-based thermoplastic elastomer continuous linear body having a fiber size of greater than or equal to 0.1 mm and less than or equal to 3.0 mm, wherein the net-like structure has, in a thickness direction of the net-like structure, a solid-section fiber main region mainly including fibers having a solid cross section, a hollow-section fiber main region mainly including fibers having a hollow cross section, and a mixed region including fibers having a solid cross section and fibers having a hollow cross section in a mixed state, located between the solid-section fiber main region and the hollow-section fiber main region, wherein in the solid-section fiber main region and the hollow-section fiber main region, the percentage of the number of fibers having the cross section in question in the total number of fibers included in the region in question is greater than or equal to 90%, both solid-section fiber main region-side residual strain after 750 N constant load repeated compression at pressurization from the side of the solid-section fiber main region of the net-like structure and hollow-section fiber main region-side residual strain after 750 N constant load repeated compression at pressurization from the side of the hollow-section fiber main region of the net-like structure are less than or equal to 20%, as measured in accordance with the method specified herein, and a difference between the solid-section fiber main region-side residual strain and the hollow-section fiber main region-side residual strain is less than or equal to 10 points, as measured in accordance with the method specified herein. The fiber size as used herein refers to an average fiber size of a plurality of measured values as will be described later on a measuring method.

[2] The net-like structure according to [1], wherein an apparent density is greater than or equal to 0.005 g/cm$^3$ and less than or equal to 0.20 g/cm$^3$, as measured in accordance with the method specified herein.

[3] The net-like structure according to [1] or [2], wherein the fibers having a hollow cross section have a fiber size greater than the fibers having a solid cross section, and a difference in fiber size between the fibers having a solid cross section and the fibers having a hollow cross section is greater than or equal to 0.07 mm. The difference in fiber size as used herein refers to a difference between an average fiber size of the fibers having a solid cross section and an average fiber size of the fibers having a hollow cross section.

[4] The net-like structure according to any of [1] to [3], wherein a ratio between 25% compression hardness at pressurization from the side of the solid-section fiber main region and 25% compression hardness at pressurization from the side of the hollow-section fiber main region is greater than or equal to 1.03, as measured in accordance with the method specified herein.

[5] The net-like structure according to any of [1] to [4], wherein a ratio between 40% compression hardness at pressurization from the side of the solid-section fiber main region and 40% compression hardness at pressurization from the side of the hollow-section fiber main region is greater than or equal to 1.05, as measured in accordance with the method specified herein.

[6] The net-like structure according to any of [1] to [5], wherein a difference between a compression deflection coefficient at pressurization from the side of the solid-section fiber main region and a compression deflection coefficient at pressurization from the side of the hollow-section fiber main region is less than or equal to 5, as measured in accordance with the method specified herein.

[7] The net-like structure according to any of [1] to [6], wherein a difference between a hysteresis loss at pressurization from the side of the solid-section fiber main region and a hysteresis loss at pressurization from the side of the hollow-section fiber main region is less than or equal to 5 points, as measured in accordance with the method specified herein.

[8] The net-like structure according to any of [1] to [7], wherein the thermoplastic elastomer continuous linear body is the polyester-based thermoplastic elastomer continuous linear body, and both a hysteresis loss at pressurization from the side of the solid-section fiber main region and a hysteresis loss at pressurization from the side of the hollow-section fiber main region are less than or equal to 30%, as measured in accordance with the method specified herein.

[9] The net-like structure according to any of [1] to [7], wherein the thermoplastic elastomer continuous linear body is the polyolefin-based thermoplastic elastomer continuous linear body, and both a hysteresis loss at pressurization from the side of the solid-section fiber main region and a hysteresis loss at pressurization from the side of the hollow-section fiber main region are less than or equal to 60%, as measured in accordance with the method specified herein.

[10] A cushion material including the net-like structure according to any of [1] to [9] inside the cushion, wherein the cushion material is usable reversibly.

The net-like structure of the present invention is a net-like structure having cushioning performance different between the front and back faces of the net-like structure and having an effect that the difference in compression durability is small from whichever face, the front or back face, pressure is applied. This has made it possible to provide a net-like structure that is usable reversibly and suitably used for office chairs, furniture, sofas, beddings such as beds, seats for vehicles such as trains, automobiles, and two-wheeled vehicles, etc. An example of the effect of being usable reversibly is an effect that a cushion material having the following features can be provided: i.e., in summer, the side of fibers having a hollow cross section, which has a thick fiber size, may be used as the front face, whereby a comparatively hard cushioning feeling and reduction in contact area make the user feel cool, and in winter, the side of fibers having a solid cross section, which has a thin fiber size, may be used as the front face, whereby a comparatively soft cushioning feeling and increase in contact area make the user feel warm.

Also, when the side of thin-size fibers having a solid cross section is used as the front face, the net-like structure of the present invention is superior in compression durability to a net-like structure constituted 100% of thin-size fibers having a solid cross section. Therefore, the net-like structure of the invention can be used desirably even when the side of thin-size fibers having a solid cross section is used as the front face, because compression durability is excellent compared with the conventional product.

BRIEF DESCRIPTION OF DRAWINGS

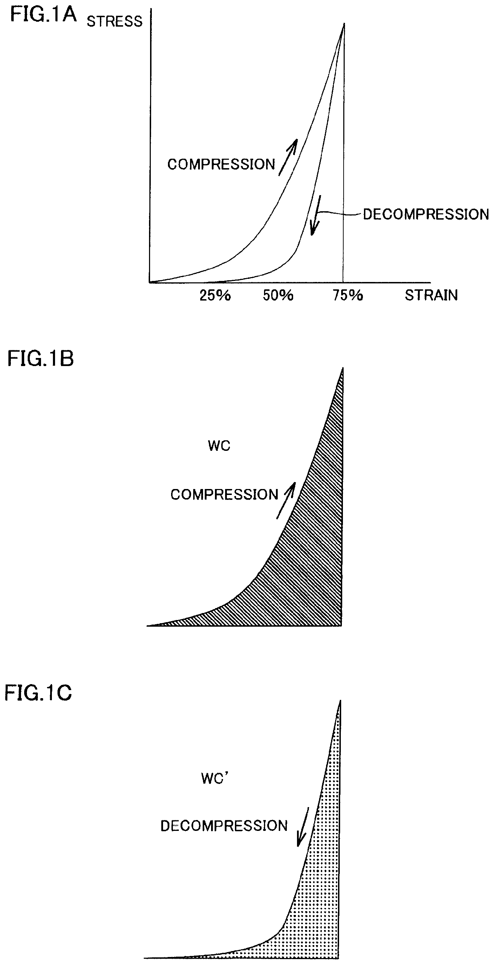

Fig. 1A is a schematic graph showing a second stress-strain curve in hysteresis loss measurement of a net-like structure.

Fig. 1B is a schematic graph showing a stress-strain curve at second compression in hysteresis loss measurement of a net-like structure.

Fig. 1C is a schematic graph showing a stress-strain curve at second decompression in hysteresis loss measurement of a net-like structure.

The present invention will be described hereinafter in detail. The present invention relates to a net-like structure having a three-dimensional random loop bonded structure constituted of a thermoplastic elastomer continuous linear body that is either a polyester-based thermoplastic elastomer continuous linear body or a polyolefin-based thermoplastic elastomer continuous linear body having a fiber size of greater than or equal to 0.1 mm and less than or equal to 3.0 mm, wherein the net-like structure has, in a thickness direction of the net-like structure, a solid-section fiber main region mainly including fibers having a solid cross section (hereinafter referred to as solid-section fibers), a hollow-section fiber main region mainly including fibers having a hollow cross section (hereinafter referred to as hollow-section fibers), and a mixed region including solid-section fibers and hollow-section fibers in a mixed state, located between the solid-section fiber main region and the hollow-section fiber main region, both solid-section fiber main region-side residual strain after 750 N constant load repeated compression at pressurization from the side of the solid-section fiber main region of the net-like structure and hollow-section fiber main region-side residual strain after 750 N constant load repeated compression at pressurization from the side of the hollow-section fiber main region of the net-like structure are less than or equal to 20%, and a difference between the solid-section fiber main region-side residual strain and the hollow-section fiber main region-side residual strain is less than or equal to 10 points.

The net-like structure of the present invention is a structure having a three-dimensional random loop bonded structure where a continuous linear body constituted of a thermoplastic elastomer continuous linear body that is either a polyester-based thermoplastic elastomer or a polyolefin-based thermoplastic elastomer continuous linear body having a fiber size of greater than or equal to 0.1 mm and less than or equal to 3.0 mm is curled to form random loops and the loops are brought into contact with one another in a molten state to be bonded together. The thermoplastic elastomer continuous linear body according to the present invention is either a polyester-based thermoplastic elastomer or a polyolefin-based thermoplastic elastomer continuous linear body having a fiber size of greater than or equal to 0.1 mm and less than or equal to 3.0 mm.

Examples of the polyester-based thermoplastic elastomer include a polyester-ether block copolymer having thermoplastic polyester as hard segments and polyalkylenediol as soft segments and a polyester block copolymer having aliphatic polyester as soft segments.

The polyester-ether block copolymer is a ternary block copolymer constituted of: at least one kind of dicarboxylic acid selected from aromatic dicarboxylic acids such as terephthalic acid, isophthalic acid, naphthalene-2,6-dicarboxylic acid, naphthalene-2,7-dicarboxylic acid, and diphenyl-4,4'-dicarboxylic acid, alicyclic dicarboxylic acids such as 1,4-cyclohexanedicarboxylic acid, aliphatic dicarboxylic acids such as succinic acid, adipic acid, sebacic acid, and dimer acid, and ester-forming derivatives thereof, etc.; at least one kind of diol component selected from aliphatic diols such as 1,4-butanediol, ethylene glycol, trimethylene glycol, tetramethylene glycol, pentamethylene glycol, and hexamethylene glycol, alicyclic diols such as 1,1-cyclohexanedimethanol and 1,4-cyclohexanedimethanol, and ester-forming derivatives thereof, etc.; and at least one kind of polyalkylenediols such as polyethylene glycol having a number average molecular weight of about 300-5000, polypropylene glycol, polytetramethylene glycol, and glycol made of ethylene oxide-propylene oxide copolymer.

The polyester block copolymer is a ternary block copolymer constituted of: the dicarboxylic acid described above; the diol described above; and at least one kind of polyesterdiols such as polylactone having a number average molecular weight of about 300-5000. Considering thermal adhesiveness, hydrolysis resistance, elasticity, heat resistance, etc., especially preferred is a ternary block copolymer constituted of terephthalic acid and/or naphthalene-2,6-dicarboxylic acid as the dicarboxylic acid, 1,4-butanediol as the diol component, and polytetramethylene glycol as the polyalkylenediol, or a ternary block copolymer constituted of polylactone as the polyesterdiol. As a special example, one with polysiloxane-based soft segments introduced therein can also be used.

As the polyester-based thermoplastic elastomer according to the present invention, the followings are also included: one with a non-elastomer component blended into, or copolymerized with, the above polyester-based thermoplastic elastomer, one with a polyolefin-based component used as soft segments, etc. Also included are ones with various additives, etc. added to the polyester-based thermoplastic elastomer as required.

To achieve a net-like structure capable of imparting cushioning performance different between both faces and having an effect that the difference in compression durability is small from whichever face pressure is applied, which is an object of the present invention, the content of soft segments of the polyester-based thermoplastic elastomer is preferably greater than or equal to 15 wt%, more preferably greater than or equal to 25 wt%, even more preferably greater than or equal to 30 wt%, especially preferably greater than or equal to 40 wt%, and, from the standpoint of secured hardness and heat and wear-and-tear resistance, it is preferably less than or equal to 80 wt%, more preferably less than or equal to 70 wt%.

A component constituted of the polyester-based thermoplastic elastomer constituting the net-like structure of the present invention preferably has an endothermic peak at a point less than or equal to a melting point in a melting curve measured with a differential scanning type calorimeter. The heat and wear-and-tear resistance significantly improves for one having an endothermic peak at a point less than or equal to the melting point, compared with one having no endothermic peak. For example, as a preferred polyester-based thermoplastic elastomer according to the present invention, terephthalic acid, naphthalene-2,6-dicarboxylic acid, etc., which have rigidity, are contained as an acid component of hard segments by greater than or equal to 90 mol%. More preferably, the content of terephthalic acid, naphthalene-2,6-dicarboxylic acid, etc. is greater than or equal to 95 mol%, especially preferably, 100 mol%. Such terephthalic acid, etc. are transesterified with a glycol component and then polymerized to a necessary degree of polymerization. Thereafter, as a polyalkylenediol, polytetramethylene glycol having an average molecular weight of preferably greater than or equal to 500 and less than or equal to 5000, more preferably greater than or equal to 700 and less than or equal to 3000, even more preferably greater than or equal to 800 and less than or equal to 1800 is copolymerized by preferably greater than or equal to 15 wt% and less than or equal to 80 wt%, more preferably greater than or equal to 25 wt% and less than or equal to 70 wt%, even more preferably greater than or equal to 30 wt% and less than or equal to 70 wt%, especially preferably greater than or equal to 40 wt% and less than or equal to 70 wt%. In this case, when the content of terephthalic acid and naphthalene-2,6-dicarboxylic acid, which have rigidity, as an acid component of hard segments is large, the crystallinity of hard segments improves, resisting plastic deformation, and improving heat and wear-and-tear resistance. The heat and wear-and-tear resistance will be more improved when annealing treatment is further performed at a temperature less than the melting point by at least greater than or equal to 10°C after heat melting adhesion. While the annealing treatment is satisfactory by heating a sample at a temperature less than the melting point by at least greater than or equal to 10°C, the heat and wear-and-tear resistance will further improve by imparting compression strain. When the thus-treated net-like structure is measured with a differential scanning type calorimeter, an endothermic peak is exhibited more clearly at a temperature greater than or equal to room temperature (e.g., 20°C) and less than or equal to the melting point in the melting curve. When no annealing is performed, an endothermic peak is not exhibited clearly at a temperature greater than or equal to room temperature (20°C) and less than or equal to the melting point in the melting curve. From this, it is considered that, by annealing, a metastable intermediate phase where the hard segments are rearranged is formed, whereby the heat and wear-and-tear resistance improves. As usages of the heat resistance improving effect according to the present invention, applications in environments where the temperature may become comparatively high, such as cushions for vehicles where a heater is used and flooring mats for heated floors, are useful because the wear-and-tear resistance becomes good.

The polyolefin-based thermoplastic elastomer according to the present invention is preferably an ethylene-$\alpha$-olefin copolymer obtained by copolymerizing ethylene and $\alpha$-olefin, more preferably a multi-block copolymer constituted of ethylene-$\alpha$-olefin that is an olefin block copolymer. The reason why a multi-block copolymer constituted of ethylene-$\alpha$-olefin is more preferable is that, in a general random copolymer, the joining chain length of the main chain is short, making it difficult to form a crystalline structure, which decreases durability. Preferably, $\alpha$-olefin copolymerizing with ethylene is $\alpha$-olefin having 3 or more carbons.

Examples of the $\alpha$-olefin having 3 or more carbons include propylene, 1-butene, 1-pentene, 1-hexene, 4-methyl-1-pentene, 1-heptene, 1-octene, 1-nonene, 1-decene, 1-undecene, 1-dodecene, 1-tridecene, 1-tetradecene, 1-pentadecene, 1-hexadecene, 1-heptadecene, 1-octadecene, 1-nonadecene, and 1-eicosene. Preferred are 1-butene, 1-pentene, 1-hexene, 4-methyl-l-pentene, 1-heptene, 1-octene, 1-nonene, 1-decene, 1-undecene, 1-dodecene, 1-tridecene, 1-tetradecene, 1-pentadecene, 1-hexadecene, 1-heptadecene, 1-octadecene, 1-nonadecene, and 1-eicosene. Also, two or more kinds of them can be used.

The random copolymer that is the ethylene-$\alpha$-olefin copolymer according to the present invention can be obtained by copolymerizing ethylene and $\alpha$-olefin using a catalyst having a specific metallocene compound and an organic metal compound as a basic configuration, and the multi-block copolymer can be obtained by copolymerizing ethylene and $\alpha$-olefin using a chain shuttling catalyst. As required, two or more kinds of polymers polymerized by the above methods and polymers such as hydrogenated polybutadiene and hydrogenated polyisoprene can be blended.

The ratio between ethylene and $\alpha$-olefin having 3 or more carbons in the ethylene-$\alpha$-olefin copolymer according to the present invention is preferably greater than or equal to 70 mol% and less than or equal to 95 mol% for ethylene and greater than or equal to 5 mol% and less than or equal to 30 mol% for α-olefin having 3 or more carbons. In general, it is known that a macromolecular compound is provided with elastomeric nature because hard segments and soft segments are present in a macromolecular chain. In the polyolefin-based thermoplastic elastomer according to the present invention, it is considered that ethylene plays a role of hard segments and α-olefin having 3 or more carbons plays a role of soft segments. Therefore, if the ratio of ethylene is less than 70 mol%, hard segments will be small, reducing the recovery performance of rubber elasticity. The ratio of ethylene is more preferably greater than or equal to 75 mol%, even more preferably greater than or equal to 80 mol%. If the ratio of ethylene exceeds 95 mol%, soft segments will be small, causing difficulty in exhibiting the elastomeric nature, and thus degrading cushioning performance. The ratio of ethylene is more preferably less than or equal to 93 mol%, even more preferably less than or equal to 90 mol%.

In the net-like structure of the present invention, apart from the polyester-based thermoplastic elastomer or the polyolefin-based thermoplastic elastomer, a polymer modifier such as a styrene-isoprene copolymer, a styrene-butadiene copolymer, and hydrogenated copolymers thereof, as a polybutadiene-based, polyisoprene-based, or styrene-based thermoplastic elastomer, can be blended as a subsidiary material, as required. Moreover, the followings can be added: phthalate ester-based, trimellitate ester-based, aliphatic acid-based, epoxy-based, adipate ester-based, and polyester-based plasticizers; known hindered phenol-based, sulfur-based, phosphorous-based, and amine-based antioxidants; hindered amine-based, triazole-based, benzophenone-based, benzoate-based, nickel-based, salicyl-based, and other light stabilizers; antistatic agents; molecular weight modifiers such as peroxides; compounds having a reactive group such as epoxy-based compounds, isocyanate-based compounds, and carbodiimide-based compounds; metal deactivators; organic and inorganic nucleating agents; neutralizers; antacids; antimicrobial agents; fluorescent whiteners; fillers; flame retardants; flame retardant auxiliaries; and organic and inorganic pigments. It is also effective to increase the molecular weight of the polyolefin-based thermoplastic elastomer to improve heat resistance, durability, and wear-and-tear resistance.

One feature of the present invention is that cushioning performance different between both faces can be imparted. A method for obtaining a net-like structure provided with cushioning performance different between both faces is to allow the presence of the following regions at least in the thickness direction of the net-like structure so as to change the cushioning properties when the net-like structure is compressed from each of the faces: i.e., a solid-section fiber main region mainly including solid-section fibers, by which its thickness is formed; a hollow-section fiber main region mainly including hollow-section fibers, by which its thickness is formed; and a mixed region other than the above regions, located between the solid-section fiber main region and the hollow-section fiber main region.

In the solid-section fiber main region and the hollow-section fiber main region, the wording "mainly" means that the percentage of the number of fibers having the cross section in question in the total number of fibers included in the region in question is greater than or equal to 90%. In the mixed region including solid-section fibers and hollow-section fibers in a mixed state, located between the solid-section fiber main region and the hollow-section fiber main region, the percentage of the number of solid-section fibers in the total number of fibers included in this region is less than that in the solid-section fiber main region, and the percentage of the number of hollow-section fibers in the total number of fibers included in this region is less than that in the hollow-section fiber main region. That is, the mixed region means a region where the number of solid-section fibers and the number of hollow-section fibers are each less than 90% of the total number of fibers included in this region.

The percentages of the numbers of fibers in a given region are measured in the following manner. First, a specimen is cut into a size of 3 cm wide × 3 cm long × specimen thickness to obtain 10 samples, and the weight of each sample is measured with an electronic balance. Thereafter, fibers constituting the specimen are extracted one by one from the same front face of the samples so that the sample thickness decreases as uniformly as possible. The work of extracting fibers one by one is continued until the sample weight first becomes less than or equal to 90% of the weight of the first-prepared sample. The cross sections of the extracted fibers are checked visually or with an optical microscope, etc., to separate solid-section fibers from hollow-section fibers and count the number of solid-section fibers and the number of hollow-section fibers. The numbers of solid-section fibers and the numbers of hollow-section fibers of 10 samples are summed, to determine the value as the total number of fibers included in the region. From the number of solid-section fibers and the number of hollow-section fibers with respect to the total number of fibers included in the region, the percentages of the number of solid-section fibers and the number of hollow-section fibers are respectively calculated, to determine whether the region is a solid-section fiber main region, a hollow-section fiber main region, or a mixed region.

The work of extracting fibers from each sample is then restarted, continuing the work of extracting fibers one by one until the sample weight first becomes less than or equal to 80% of the weight of the first-prepared sample, and, as in the manner described above, from the number of solid-section fibers and the number of hollow-section fibers with respect to the total number of fibers included in the region, the percentages of the number of solid-section fibers and the number of hollow-section fibers are respectively calculated, to determine whether the region is a solid-section fiber main region, a hollow-section fiber main region, or a mixed region.

Thereafter, the work of extracting fibers from each sample is repeated every about 10% of sample weight, i.e.,

until the sample weight first becomes less than or equal to 70% of the weight of the first-prepared sample, until the sample weight first becomes less than or equal to 60% of the weight of the first-prepared sample, until the sample weight first becomes less than or equal to 50% of the weight of the first-prepared sample, until the sample weight first becomes less than or equal to 40% of the weight of the first-prepared sample, until the sample weight first becomes less than or equal to 30% of the weight of the first-prepared sample, until the sample weight first becomes less than or equal to 20% of the weight of the first-prepared sample, until the sample weight first becomes less than or equal to 10% of the weight of the first-prepared sample, and further until the sample weight becomes 0%. As in the manner described above, from the number of solid-section fibers and the number of hollow-section fibers with respect to the total number of fibers included in each of 10 regions divided in the thickness direction from the front face, the percentages of the number of solid-section fibers and the number of hollow-section fibers are respectively calculated, to determine whether each region is a solid-section fiber main region, a hollow-section fiber main region, or a mixed region.

Another feature of the present invention is that the difference in compression durability at pressurization from the side of the solid-section fiber main region of the net-like structure and at pressurization from the side of the hollow-section fiber main region thereof is small. Specifically, the difference between the solid-section fiber main region-side residual strain after 750 N constant load repeated compression at pressurization from the solid-section fiber main region side and the hollow-section fiber main region-side residual strain after 750 N constant load repeated compression at pressurization from the hollow-section fiber main region side is less than or equal to 10 points, preferably less than or equal to 9 points, more preferably less than or equal to 8 points, even more preferably less than or equal to 6 points. If the difference between the solid-section fiber main region-side residual strain and the hollow-section fiber main region-side residual strain after 750 N constant load repeated compression exceeds 10 points, the difference in compression durability will be too large between the solid-section fiber main region side and the hollow-section fiber main region side. This is not preferable because the wear-and-tear state of the net-like structure will vary with the use direction when the net-like structure of the present invention is used reversibly. The lower limit of the difference between the solid-section fiber main region-side residual strain and the hollow-section fiber main region-side residual strain after 750 N constant load repeated compression is 0 point where there is no difference in compression durability between the solid-section fiber main region side and the hollow-section fiber main region side. As used herein, the wording "difference" refers to a value obtained by subtracting the smaller one of two values from the larger one. The wording "point" is a unit representing a difference between two values in "%." For example, it is a unit representing the difference between the solid-section fiber main region-side residual strain and the hollow-section fiber main region-side residual strain.

Both the solid-section fiber main region-side residual strain and the hollow-section fiber main region-side residual strain of the net-like structure of the present invention are less than or equal to 20%, preferably less than or equal to 15%, more preferably less than or equal to 13%, even more preferably less than or equal to 11%. At least either the solid-section fiber main region-side residual strain or the hollow-section fiber main region-side residual strain being a high value means that the compression durability is poor.

In the residual strain after 750 N constant load repeated compression, in order to reduce the difference between the solid-section fiber main region-side residual strain and the hollow-section fiber main region-side residual strain, it is important to allow the presence of a mixed region including solid-section fibers and hollow-section fibers in a mixed state at a position between the solid-section fiber main region and the hollow-section fiber main region, so that these regions are integrated, not separated from one another, thereby forming the thickness of the entire net-like structure.

It is possible to impart cushioning performance different between both faces even with a 2-stack layered net-like structure where a net-like structure mainly including solid-section fibers and a net-like structure mainly including hollow-section fibers are merely stacked on each other without the presence of a mixed region including solid-section fibers and hollow-section fibers in a mixed state, and they can be easily separated and are not integrated. However, in such a stack layered net-like structure, when pressurizing compression is performed from the face of the net-like structure low in compression hardness, only the net-like structure low in compression hardness is first deformed by compression, whereby only the net-like structure low in compression hardness becomes deflected independently from the net-like structure high in compression hardness. It is only at the stage when the net-like structure low in compression hardness alone can no more stand the compression load that the compression stress propagates to the net-like structure high in compression hardness, at which deformation and deflection of the net-like structure high in compression hardness start. Therefore, when pressurizing compression is repeated, fatigue builds up first in the net-like structure low in compression hardness, whereby reduction in thickness and reduction in compression hardness proceed faster than the net-like structure high in compression hardness. That is, while such a layered net-like structure can exert cushioning performance different between both faces, the difference in compression durability at pressurization from both faces is great.

It is also possible to impart cushioning performance different between both faces even with a 2-bond layered net-like structure where a net-like structure mainly including solid-section fibers and a net-like structure mainly including hollow-section fibers are bonded together by adhesion without the presence of a mixed region including solid-section fibers and hollow-section fibers in a mixed state. However, in such a bond layered net-like structure, while, at the initial stage of repeated compression, both net-like structures are deformed and deflected under pressurizing compression load in an integrated manner, stress is concentrated on the bonding plane as compression is repeated, causing reduction in adhesion force and coming off. Therefore, in this 2-bond layered net-like structure, also, the difference in compression durability at pressurization from both faces is great.

It is also possible to impart cushioning performance different between both faces even with a net-like structure where a solid-section fiber main region mainly including solid-section fibers and a hollow-section fiber main region mainly including hollow-section fibers are integrated by fusion without the presence of a mixed region including solid-section fibers and hollow-section fibers in a mixed state. Such a net-like structure can be obtained by a method of stacking by fusion a net-like structure mainly including solid-section fibers by discharging solid-section fibers onto a net-like structure mainly including hollow-section fibers However, in the net-like structure obtained by this method, since solid-section fibers are fused after hollow-section fibers have been solidified, the fusion bonding force on the boundary between the hollow-section fiber layer and the solid-section fiber layer is low, whereby stress is concentrated on the boundary as compression load is repeatedly applied, causing interfacial peeling, resulting in deterioration in durability.

The net-like structure of the present invention has a mixed region including solid-section fibers and hollow-section fibers in a mixed state located between the solid-section fiber main region and the hollow-section fiber main region, and these regions are integrated, not separated from one another, thereby forming the thickness of the entire net-like structure. With this structure, even when pressurizing compression is performed from the side low in compression hardness, stress propagates to the side high in compression hardness through the mixed region from the initial stage of compression. Stress is therefore dispersed effectively in the thickness direction, and the entire net-like structure deforms and deflects against pressurizing compression load. This has made it possible to reduce the difference between the repeated compression durability at pressurization from the side low in compression hardness and the repeated compression durability at pressurization from the side high in compression hardness.

The net-like structure of the present invention is obtained by adding new technology to the known method described in Japanese Patent Laying-Open No. 2014-194099, etc. For example, a thermoplastic elastomer that is either a polyester-based thermoplastic elastomer or a polyolefin-based thermoplastic elastomer is distributed to nozzle orifices from a multi-row nozzle that has a plurality of orifices having a plurality of different orifice hole sizes to be described later, and discharged downward from the nozzle at a spinning temperature (melting temperature) higher than the melting point of the thermoplastic elastomer by a temperature greater than or equal to 20°C and less than 120°C. Continuous linear bodies are brought into contact with one another in a molten state and fused together to form a three-dimensional structure, which is simultaneously sandwiched by take-up conveyer nets, cooled with cooling water in a cooling bath, then drawn out, and drained or dried, to obtain a net-like structure with both faces or one face smoothed. When only one face is to be smoothed, the elastomer may be discharged onto an inclined take-up net, and continuous linear bodies may be brought into contact with one another in a molten state and fused together to form a three-dimensional structure, which may be simultaneously cooled while the form of only the take-up net face is relaxed. The obtained net-like structure can also be subjected to annealing treatment. Note that drying treatment of the net-like structure may be regarded as annealing treatment.

The obtained net-like structure can be subjected to heat treatment (annealing treatment). The heat treatment is preferably performed at a temperature less than or equal to the melting point of the thermoplastic elastomer: preferably at a temperature less than the melting point by greater than or equal to 5°C, more preferably at a temperature less than the melting point by greater than or equal to 10°C. The heat treatment temperature is preferably greater than or equal to 90°C, more preferably greater than or equal to 95°C, even more preferably greater than or equal to 100°C for the polyester-based thermoplastic elastomer, and preferably greater than or equal to 70°C, more preferably greater than or equal to 80°C, even more preferably greater than or equal to 90°C for the polyolefin-based thermoplastic elastomer. The heat treatment time is preferably greater than or equal to 1 minute, more preferably greater than or equal to 10 minutes, even more preferably greater than or equal to 20 minutes, especially preferably greater than or equal to 30 minutes. While a longer heat treatment time is preferable, a heat treatment time exceeding a given time no more increases the effect of the heat treatment but conversely causes degradation of resin. It is therefore preferred to perform the heat treatment within one hour.

The continuous linear bodies constituting the net-like structure of the present invention preferably have an endothermic peak at a temperature from room temperature (20°C) to less than or equal to the melting point in the melting curve when measured with a differential scanning type calorimeter. Two or more such endothermic peaks may be present, or a shoulder-like endothermic peak may appear depending on the proximity to the melting point and the base line shape. The heat and wet-heat resistance improves for one having an endothermic peak, compared with one having no endothermic peak. As usages of the heat and wear-and-tear resistance improving effect according to the present invention, applications in environments where the temperature may become comparatively high and compression is comparatively repeated, such as cushions for vehicles where a heater is used and flooring mats for heated floors, are useful because durability is good.

As a means for obtaining the net-like structure of the present invention, it is preferred to optimize the nozzle shape and dimensions and the arrangement of nozzle holes. As for the nozzle shape, the orifice size for forming thin fibers is preferably less than or equal to 1.5 mm, and the orifice size for forming thick fibers is preferably greater than or equal to 2 mm. The nozzle orifice shape for forming thick fibers preferably has a hollow forming property. Examples of such nozzles include a C-type nozzle and a triple bridge shaped nozzle. From the standpoint of durability, a triple bridge shaped nozzle is preferable. The inter-hole pitch is preferably greater than or equal to 4 mm and less than or equal to 12 mm, more preferably greater than or equal to 5 mm and less than or equal to 11 mm, for both orifices for forming thin fibers and orifices for forming thick fibers. Examples of the arrangement of nozzle holes include lattice arrangement, circumferential arrangement, and zigzag arrangement. From the standpoint of the quality of the net-like structure, lattice arrangement or zigzag arrangement is preferable. The inter-hole pitch as used herein refers to the distance between the centers of nozzle holes, and has an inter-hole pitch in the width direction of the net-like structure (hereinafter referred to as a "width-direction inter-hole pitch") and an inter-hole pitch in the thickness direction of the net-like structure (hereinafter referred to as a "thickness-direction inter-hole pitch"). The preferable inter-hole pitch described above is an inter-hole pitch suitable for both the width-direction inter-hole pitch and the thickness-direction inter-hole pitch.

A nozzle for obtaining the net-like structure of the present invention is constituted of three groups (a group, ab mixed group, and b group), that is,

a group: an orifice hole group where orifice holes for solid-section fibers are arranged in a plurality of rows in the thickness direction,

ab mixed group: an orifice hole group where orifice holes for solid-section fibers and orifice holes for hollow-section fibers are arranged in a mixed state in a plurality of rows in the thickness direction, and

b group: an orifice hole group where orifice holes for hollow-section fibers are arranged in a plurality of rows in the thickness direction.

As another nozzle, there is a nozzle constituted of two groups ($\alpha$ group and $\beta$ group), that is,

$\alpha$ group: an orifice hole group where orifice holes for solid-section fibers are arranged in a plurality of rows in the thickness direction, and

$\beta$ group: an orifice hole group where orifice holes for hollow-section fibers are arranged in a plurality of rows in the thickness direction,

and the difference between the width-direction inter-hole pitch of orifices for solid-section fibers and the width-direction inter-hole pitch of orifices for hollow-section fibers is small. From the standpoint that the structure of the nozzle can be simplified, the nozzle constituted of $\alpha$ group and $\beta$ group is more preferable.

Although the nozzle has only two orifice hole groups, fibers spun from near the boundary between $\alpha$ group and $\beta$ group form a mixed region having solid-section fibers and hollow-section fibers in a mixed state. Therefore, the net-like structure of the present invention having three regions in the thickness direction can be obtained.

In order to obtain the net-like structure of the present invention where the difference in compression durability is small from whichever face pressure is applied, it is necessary to reduce the difference between the width-direction inter-hole pitch of orifices for solid-section fibers and the width-direction inter-hole pitch of orifices for hollow-section fibers. The reason why the difference in durability is small when the difference in width-direction inter-hole pitch is small has not been clarified completely, but is presumed as follows.

Being small in the difference in the width-direction inter-hole pitch of orifices in the mixed region including solid-section fibers and hollow-section fibers in a mixed state means that the numbers of constituent solid-section fibers and hollow-section fibers in the mixed region are close to each other. When the numbers of constituent solid-section fibers and hollow-section fibers are close to each other, it is indicative that solid-section fibers and hollow-section fibers constitute a plurality of contact points in a roughly one-to-one relationship. Therefore, it is considered that stress easily propagates from whichever face pressure is applied, whereby the difference in compression durability is small from whichever face pressure is applied.

On the contrary, the case is considered where a net-like structure is formed using a nozzle large in the difference in the width-direction inter-hole pitch of orifices. When the number of constituent solid-section fibers is large compared with the number of constituent hollow-section fibers in the mixed region including solid-section fibers and hollow-section fibers in a mixed state, some of the solid-section fibers hardly have contact points with hollow-section fibers in the mixed region. Therefore, it is considered that, at pressurization from the side of hollow-section fibers, there are solid-section fibers to which stress hardly propagate from hollow-section fibers, and such solid-section fibers receive stress via other solid-section fibers to which stress has propagated from hollow-section fibers. Conversely, it is considered that, at pressurization from the side of solid-section fibers, there are solid-section fibers that cannot propagate stress to hollow-section fibers, and such solid-section fibers propagate stress to hollow-section fibers via other solid-section fibers that can propagate stress to hollow-section fibers.

In other words, it is considered that, when a net-like structure is formed using a nozzle large in the difference in the width-direction inter-hole pitch of orifices, the propagation of stress is dispersed in the thickness direction and directions orthogonal to the thickness direction in the mixed region including solid-section fibers and hollow-section fibers in a mixed state, reducing the stress propagation efficiency, and thus the difference in compression durability is large between the case of pressurization from the side of solid-section fibers and the case of pressurization from the side of hollow-section fibers.

The difference between the width-direction inter-hole pitch of orifices for solid-section fibers and the width-direction inter-hole pitch of orifices for hollow-section fibers is preferably less than or equal to 2 mm, more preferably less than or equal to 1 mm, even more preferably 0 mm, in which, namely, the width-direction inter-hole pitches are the same.

The fiber size (average fiber size: this also applies to description below) of the continuous linear bodies constituting the net-like structure of the present invention is greater than or equal to 0.1 mm and less than or equal to 3.0 mm, preferably greater than or equal to 0.2 mm and less than or equal to 2.5 mm, more preferably greater than or equal to 0.3 mm and less than or equal to 2.0 mm. If the fiber size is less than 0.1 mm, the continuous linear bodies will be so fine that, while compactness and soft touch will be good, it will be difficult to secure the hardness required for the net-like structure. If the fiber size exceeds 3.0 mm, while the hardness of the net-like structure may be sufficiently secured, the net-like structure may be coarse, degrading other cushioning performance. From this standpoint, it is necessary to set the plurality of fiber sizes within a proper range.

In the continuous linear bodies constituting the net-like structure of the present invention, since hollow-section fibers are high in second moment of area than solid-section fibers given that the fineness is the same, resistance to compression is higher when hollow-section fibers are used. Therefore, in order to obtain cushioning performance different more significantly between both faces, the fiber size of hollow-section fibers is preferably large compared with the fiber size of solid-section fibers.

The difference in fiber size (difference in average fiber size; this also applies to description below) between hollow-section fibers and solid-section fibers of the continuous linear bodies constituting the net-like structure of the present invention is preferably greater than or equal to 0.07 mm, more preferably greater than or equal to 0.10 mm, even more preferably greater than or equal to 0.12 mm, especially preferably greater than or equal to 0.15 mm, more especially preferably greater than or equal to 0.20 mm, most preferably greater than or equal to 0.25 mm. The upper limit of the difference in fiber size is preferably less than or equal to 2.5 mm according to the present invention. If the difference in fiber size is less than 0.07 mm, the difference in cushioning performance between both faces will be small. If the difference in fiber size is excessively large, there will be an excessive feeling of strangeness. It is therefore necessary to set the difference in fiber size within a proper range.

The total weight ratio of solid-section fibers constituting the net-like structure of the present invention is preferably greater than or equal to 10% and less than or equal to 90% with respect to all fibers constituting the net-like structure. In order to impart good reversibility to the net-like structure of the present invention, the ratio is more preferably greater than or equal to 20% and less than or equal to 80%, even more preferably greater than or equal to 30% and less than or equal to 70%. If the ratio is less than 10% or exceeds 90%, the difference in cushioning performance will be small.

The continuous linear bodies constituting the net-like structure of the present invention may be combined with another thermoplastic resin to form complex linear bodies within the bounds of not impairing the object of the present invention. When the linear bodies themselves are complexed, examples of the complex form include complex linear bodies of sheath core type, side-by-side type, and eccentric sheath core type.

The cross-sectional shape of the continuous linear bodies constituting the net-like structure of the present invention is preferably roughly circular for both solid-section fibers and hollow-section fibers. In some cases, however, compression resistance and touch can be imparted by providing an abnormal cross section.

The net-like structure of the present invention can be subjected to treatment processing such as addition of chemicals to impart functions such as antibacterial deodorization, deodorization, mold prevention, coloring, fragrance, flame resisting, and absorption and desorption of moisture, at any given stage from a resin manufacturing process to processing into a molded body and commercialization, within the bounds of not deteriorating the performance.

The net-like structure of the present invention includes structures formed into any shape. For example, included are net-like structures having shapes of a plate, a triangle pole, a polyhedron, a cylinder, and a sphere and a shape including many of these shapes. Such structures can be formed by a known method such as cutting, hot pressing, and processing of nonwoven fabric.

The net-like structure of the present invention also includes a net-like structure having the net-like structure of the present invention as a part thereof.

The apparent density of the net-like structure of the present invention is preferably greater than or equal to 0.005 g/cm$^3$ and less than or equal to 0.20 g/cm$^3$, more preferably greater than or equal to 0.01 g/cm$^3$ and less than or equal to 0.18 g/cm$^3$, even more preferably greater than or equal to 0.02 g/cm$^3$ and less than or equal to 0.15 g/cm$^3$. If the apparent density is less than 0.005 g/cm$^3$, the required hardness cannot be secured when the net-like structure is used as a cushion material. If the apparent density exceeds 0.20 g/cm$^3$, the net-like structure may be too hard to be suitable for a cushion material.

The thickness of the net-like structure of the present invention is preferably greater than or equal to 5 mm, more preferably greater than or equal to 10 mm. If the thickness is less than 5 mm, the net-like structure will be so thin for use as a cushion material that a bottom touch feeling may occur. The upper limit of the thickness is preferably less than or equal to 300 mm, more preferably less than or equal to 200 mm, even more preferably less than or equal to 120 mm from the standpoint of manufacturing equipment.

In the net-like structure of the present invention, for the net-like structure having a three-dimensional random loop bonded structure constituted of a polyester-based thermoplastic elastomer, both the hardness at 25% compression at pressurization from the solid-section fiber main region side and the hardness at 25% compression at pressurization from the hollow-section fiber main region side are preferably greater than or equal to 10 N/$\phi$100mm, more preferably greater than or equal to 20 N/$\phi$100mm. If the 25% compression hardness is less than 10 N/$\phi$100mm, the hardness as a cushion material will be insufficient, and a bottom touch feeling may occur. The upper limit of the 25% compression hardness is not particularly specified, but preferably less than or equal to 1.5 kN/$\phi$100mm.

For the net-like structure having a three-dimensional random loop bonded structure constituted of a polyolefin-based thermoplastic elastomer, both the 25% compression hardness at pressurization from the solid-section fiber main region side and the 25% compression hardness at pressurization from the hollow-section fiber main region side are preferably greater than or equal to 2 N/$\phi$100mm, more preferably greater than or equal to 5 N/$\phi$100mm. If the 25% compression hardness is less than 2 N/$\phi$100mm, the hardness as a cushion material will be insufficient, and a bottom touch feeling may occur. The upper limit of the 25% compression hardness is not particularly specified, but preferably less than or equal to 1.5 kN/$\phi$100mm.

In the net-like structure of the present invention, whether it is constituted of a polyester-based thermoplastic elastomer or a polyolefin-based thermoplastic elastomer, the ratio between the 25% compression hardness at pressurization from the solid-section fiber main region side and the 25% compression hardness at pressurization from the hollow-section fiber main region side is preferably greater than or equal to 1.03, more preferably greater than or equal to 1.05, even more preferably greater than or equal to 1.07, especially preferably greater than or equal to 1.10, most preferably greater than or equal to 1.20. If the ratio of the 25% compression hardness is less than 1.03, the difference in cushioning performance between both faces will be small. As used herein, the wording "ratio" refers to a ratio of the larger one of two values to the smaller one, which is equal to a value obtained by dividing the larger value by the smaller value.

In the net-like structure of the present invention, for the net-like structure having a three-dimensional random loop bonded structure constituted of a polyester-based thermoplastic elastomer, both the 40% compression hardness at pressurization from the solid-section fiber main region side and the 40% compression hardness at pressurization from the hollow-section fiber main region side are preferably greater than or equal to 20 N/$\phi$100mm, more preferably greater than or equal to 30 N/$\phi$100mm, even more preferably greater than or equal to 40 N/$\phi$100mm. If the 40% compression hardness is less than 20 N/$\phi$100mm, the hardness as a cushion material will be insufficient, and a bottom touch feeling may occur. The upper limit of the 40% compression hardness is not particularly specified, but preferably less than or equal to 5 kN/$\phi$100mm.

For the net-like structure having a three-dimensional random loop bonded structure constituted of a polyolefin-based thermoplastic elastomer, both the 40% compression hardness at pressurization from the solid-section fiber main region side and the 40% compression hardness at pressurization from the hollow-section fiber main region side are preferably greater than or equal to 5 N/$\phi$100mm, more preferably greater than or equal to 10 N/$\phi$100mm, even more preferably greater than or equal to 15 N/$\phi$100mm. If the 40% compression hardness is less than 5 N/$\phi$100mm, the hardness as a cushion material will be insufficient, and a bottom touch feeling may occur. The upper limit of the 40% compression hardness is not particularly specified, but preferably less than or equal to 5 kN/$\phi$100mm.

In the net-like structure of the present invention, whether it is constituted of a polyester-based thermoplastic elastomer or a polyolefin-based thermoplastic elastomer, the ratio between the 40% compression hardness at pressurization from the solid-section fiber main region side and the 40% compression hardness at pressurization from the hollow-section fiber main region side is preferably greater than or equal to 1.05, more preferably greater than or equal to 1.07, even more preferably greater than or equal to 1.10, especially preferably greater than or equal to 1.15, most preferably greater than or equal to 1.20. If the ratio of the 40% compression hardness is less than 1.05, the difference in cushioning performance between both faces will be small.

In the net-like structure of the present invention, whether the net-like structure is constituted of a polyester-based thermoplastic elastomer or a polyolefin-based thermoplastic elastomer, both the compression deflection coefficient at pressurization from the solid-section fiber main region side and the compression deflection coefficient at pressurization from the hollow-section fiber main region side are preferably greater than or equal to 2.5 and less than or equal to 10.0, more preferably greater than or equal to 2.6 and less than or equal to 9.0, even more preferably greater than or equal to 2.7 and less than or equal to 8.0. If the compression deflection coefficient is less than 2.5, the difference in cushioning performance with a change in compression ratio will be small, and this may worsen comfort to sleep on and comfort to sit on. If it exceeds 10.0, the difference in cushioning performance will be excessively large with a change in compression ratio, and this may cause a bottom touch feeling and a feeling of strangeness.

In the net-like structure of the present invention, whether the net-like structure is constituted of a polyester-based thermoplastic elastomer or a polyolefin-based thermoplastic elastomer, the difference between the compression deflection coefficient at pressurization from the solid-section fiber main region side and the compression deflection coefficient at pressurization from the hollow-section fiber main region side is preferably less than or equal to 5. If the difference between the compression deflection coefficients exceeds 5, a bottom touch feeling and a feeling of strangeness may occur at the use of the face where the compression deflection coefficient is higher. The lower limit of the difference between the compression deflection coefficients is not particularly specified, but, according to the present invention, preferably 0 where there is no difference at all.

In the net-like structure of the present invention, for the net-like structure having a three-dimensional random loop bonded structure constituted of a polyester-based thermoplastic elastomer, both the hysteresis losses at pressurization from the solid-section fiber main region side and the hollow-section fiber main region side are preferably less than or equal to 30%, more preferably less than or equal to 29%, even more preferably less than or equal to 28%, especially preferably less than or equal to 26%. If the hysteresis loss exceeds 30%, highly-resilient comfort to sleep on and comfort to sit on, provided by the net-like structure of the present invention, will no more be retained. The lower limit of the hysteresis loss is not particularly specified, but preferably greater than or equal to 1%.

For the net-like structure having a three-dimensional random loop bonded structure constituted of a polyolefin-based thermoplastic elastomer, both the hysteresis losses at pressurization from the solid-section fiber main region side and the hollow-section fiber main region side are preferably less than or equal to 60%, more preferably less than or equal to 55%, even more preferably less than or equal to 50%, especially preferably less than or equal to 45%. If the hysteresis loss exceeds 60%, highly-resilient comfort to sleep on and comfort to sit on, provided by the net-like structure of the present invention, will no more be retained. The lower limit of the hysteresis loss is not particularly specified, but preferably greater than or equal to 1%.

In the net-like structure of the present invention, whether the net-like structure is constituted of a polyester-based thermoplastic elastomer or a polyolefin-based thermoplastic elastomer, the hysteresis loss on the side of lower hardness at compression tends to be higher than the hysteresis loss on the side of higher hardness at compression, in comparison between the hysteresis loss at pressurization from the solid-section fiber main region side and the hysteresis loss at pressurization from the hollow-section fiber main region side.

According to the present invention, the residual strain after 750 N constant load repeated compression, the 25%, 40%, and 65% compression hardness, and the hysteresis losses at pressurization from the solid-section fiber main region side and the hollow-section fiber main region side can be measured using a universal tester such as Instron universal tester manufactured by Instron Japan Co., Ltd., precision universal tester Autograph AG-X plus manufactured by SHIMAZDU CORPORATION, and TENSILON universal tester manufactured by Orientec Co., Ltd.

In the net-like structure of the present invention, the difference between the hysteresis loss at pressurization from the solid-section fiber main region side and the hysteresis loss at pressurization from the hollow-section fiber main region side is preferably less than or equal to 5 points If the difference between the hysteresis losses exceeds 5 points, highly-resilient comfort to sleep on and comfort to sit on, provided by the net-like structure, will no more be retained. The lower limit of the hysteresis loss is not particularly specified, but, according to the present invention, preferably greater than or equal to 0 point where there is no difference at all.

The thus-obtained net-like structure of the present invention is provided with cushioning performance different between both faces. In manufacturing conventional mats provided with cushioning performance different between both faces, another net-like structure different in design, hard cotton, urethane, or the like was stacked on the net-like structure inside a fabric case. Although these are excellent in cushioning performance, there have been problems as follows: the compression durability is different between the case of use from one face and the case of use from the other face; since the manufacturing cost is high, the resultant product is comparatively expensive, and since sorted recovery is necessary, recycling is cumbersome. The net-like structure of the present invention that is small in difference in compression durability between both faces and provided with cushioning performance different between both faces can solve the above problems.

The cushion material according to the present invention includes the above net-like structure inside the cushion and can be used reversibly. According to the present invention, being usable reversibly means that a cushion material can be used from either side, the solid-section fiber main region side or the hollow-section fiber main region side, of the net-like structure included in the cushion material. Therefore, a use mode of using a cushion material only from one side, the solid-section fiber main region side or the hollow-section fiber main region side, also corresponds with the use according to the present invention.

EXAMPLES

While the present invention will be described hereinafter concretely with reference to examples, the present invention is not limited to these examples. Measurement and evaluation of property values in examples were performed in the following manners. Note that, while the sizes of specimens described below were considered standard, a possible specimen size was used for measurement when the quantity of specimens was insufficient.

(1) Fiber Size (mm)

A specimen was cut into a size of 10 cm wide × 10 cm long × specimen thickness, and linear bodies of 10 solid-section fibers and 10 hollow-section fibers were collected by a length of about 5 mm randomly in the thickness direction from the cut cross section. The collected linear bodies were observed with an optical microscope with an appropriate magnification, focusing on a fiber size measurement point, to measure the fiber size as viewed from the fiber side face. As the average fiber size, the average in each of regions different in fiber size was calculated (unit: mm) (average value of n=10 each). That is, the fiber sizes of the solid-section fibers and the hollow-section fibers respectively mean the average fiber sizes of the solid-section fibers and the hollow-section fibers. As for the measurement of the fiber size in Comparative Examples I-2 and II-1, 10 fibers were collected by a length of about 5 mm randomly in the thickness direction from the cut cross section, and were observed with an optical microscope with an appropriate magnification, focusing on a fiber size measurement point, to measure the fiber size as viewed from the fiber side face. Since the surface of the net-like structure is made flat to obtain smoothness, the fiber cross section may be deformed. For this reason, it was decided not to collect a specimen in a region within 2 mm from the surface of the net-like structure.

(2) Difference in Fiber Size (mm)

The difference between the averages of the fiber sizes of the solid-section fibers and the hollow-section fibers measured in (1) above was determined, to calculate the difference in fiber size according to the formula below.

$$(\text{Difference in fiber size}) = |\,(\text{Average of fiber sizes of hollow-section fibers}) - (\text{Average of fiber sizes of solid-section fibers})\,| \quad (\text{unit: mm})$$

That is, the difference in fiber size between solid-section fibers and hollow-section fibers means the difference between the average fiber size of solid-section fibers and the average fiber size of hollow-section fibers. In Comparative Example I-2 and II-1, the difference in fiber size was calculated according to the formula below.

$$(\text{Difference in fiber size}) = (\text{Average of fiber sizes of thick fibers}) - (\text{Average of fiber sizes of thin fibers}) \quad (\text{unit: mm})$$

The above meaning also applies to the difference in fiber size between thick fibers and thin fibers.

(3) Total Weight Ratio of Solid-Section Fibers (%)

A specimen was cut into a size of 5 cm wide × 5 cm long × specimen thickness. Fibers constituting the specimen were checked visually or with an optical microscope, etc. and sorted into solid-section fibers and hollow-section fibers. Thereafter, the total weight of only the solid-section fibers and the total weight of only the hollow-section fibers were measured. The total weight ratio of the solid-section fibers was calculated according to the formula below.

$$(\text{Total weight ratio of solid-section fibers}) = (\text{Total weight of solid-section fibers}) / (\text{Total weight of solid-section fibers} + \text{Total weight of hollow-section fibers}) \times 100 \quad (\text{unit: \%})$$

(4) Hollowness (%)

A specimen was cut into a size of 5 cm wide × 5 cm long × specimen thickness, and 10 linear bodies of hollow-section fibers were collected randomly in the thickness direction from a cut cross section in a region of the specimen except for the ranges within 10% from both faces of the specimen in the thickness direction. The collected linear bodies were cut in a slicing direction, and placed on cover glass in a standing state along the fiber axis, to obtain a fiber cross-sectional picture in the slicing direction with an optical microscope. From the cross-sectional picture, a hollow part area (a) and the total area (b) of the fiber including the hollow part were determined, to calculate the hollowness according to the formula below.

$$(\text{Hollowness}) = (a) / (b) \times 100 \qquad (\text{unit: \%, average of n=10})$$

(5) Thickness and Apparent Density (mm and g/cm$^3$)

A specimen was cut into a size of 10 cm wide $\times$ 10 cm long $\times$ specimen thickness to obtain 4 samples, and the samples were left standing with no load for 24 hours. Thereafter, the height at one point of each sample was measured, with the side of solid-section fibers facing up, using a circular probe having an area of 15 cm$^2$ with a thickness gauge Model FD-80N manufactured by Kobunshi Keiki Co., Ltd., to determine the average of the 4 samples as the thickness. The weight was also measured by placing the specimen on an electronic balance, to determine the average of the weights of the 4 samples as the weight. The apparent density was calculated from the average specimen weight and the average specimen thickness according to the formula below.

$$(\text{Apparent density}) = (\text{Weight}) / (\text{Thickness} \times 10 \times 10) \qquad (\text{unit: g/cm}^3)$$

(6) Melting Point (Tm) (°C)

An endothermic peak (melting peak) temperature was determined from an endothermic/exothermic curve measured at a temperature rise rate of 20°C/min using a differential scanning calorimeter Q200 manufactured by TA Instruments.

(7) Residual Strain after 750 N Constant Load Repeated Compression (%)

A specimen was cut into a size of 40 cm wide $\times$ 40 cm long $\times$ specimen thickness, and the cut sample was left standing with no load for 24 hours under an environment of 23°C $\pm$ 2°C, and then measured using a universal tester (Instron universal tester manufactured by Instron Japan Co., Ltd.) that was under an environment of 23°C $\pm$ 2°C. The sample was placed in the tester so as to be in the center with respect to a pressure plate having a diameter of 200 mm and a thickness of 3 mm, and the thickness at the time when a load of 5 N was detected by the universal tester was measured as an initial hardness meter thickness (c). Immediately after this measurement, the thickness-measured sample was subjected to 750 N constant load repeated compression using ASKER STM-536 in conformity with JIS K6400-4 (2004) A Method (Constant Load Method). As the pressurizer, used was one having a shape of a circle having a diameter of 250 $\pm$ 1 mm and a thickness of 3 mm, with a radius of curvature of 25 $\pm$ 1 mm at an edge portion of the bottom face and having a flat lower face. The load was 750 N $\pm$ 20 N, the compression frequency was 70 $\pm$ 5 times per minute, the number of times of repeated compression was 80,000, the percentage of the time during which the sample was pressurized at the maximum 750 $\pm$ 20 N was less than or equal to 25% of the time required for repeated compression. After termination of the repeated compression, the test piece was left standing in a non-pressurized state for 10 $\pm$ 0.5 minutes. Using a universal tester (Instron universal tester manufactured by Instron Japan Co., Ltd.), the sample was placed in the tester so as to be in the center with respect to a pressure plate having a diameter of 200 mm and a thickness of 3 mm, and the thickness at the time when a load of 5 N was detected by the universal tester was measured as a hardness meter thickness (d) after repeated compression. The residual strain after 750 N constant load repeated compression was calculated using the initial hardness meter thickness (c) and the hardness meter thickness (d) after repeated compression according to the formula below.

$$(\text{Residual strain after 750 N constant load repeated compression})$$
$$= \{(c) - (d)\} / (c) \times 100 \qquad (\text{unit: \%, average of n=3})$$

The above measurement was performed for each of the case of pressurization from the solid-section fiber main region side and the case of pressurization from the hollow-section fiber main region side. Note that separate samples were prepared and used for measurement of the residual strain in the case of pressurization from the solid-section fiber main region side, which is hereinafter referred to as the solid-section fiber main region-side residual strain, and the residual strain in the case of pressurization from the hollow-section fiber main region side, which is hereinafter referred to as the hollow-section fiber main region-side residual strain.

(8) Difference between Solid-Section Fiber Main Region-Side Residual Strain and Hollow-Section Fiber Main Region-Side Residual Strain (point)

Using the solid-section fiber main region-side residual strain and the hollow-section fiber main region-side residual strain calculated in (7) above, the difference was calculated according to the formula below.

$$\text{(Difference between residual strain after 750 N constant load repeated compression at pressurization from solid-section fiber main region side and residual strain after 750 N constant load repeated compression at pressurization from hollow-section fiber main region side)} = | \text{(Residual strain after 750 N constant load repeated compression at pressurization from solid-section fiber main region side)} - \text{(Residual strain after 750 N constant load repeated compression at pressurization from hollow-section fiber main region side)} | \quad \text{(unit: point)}$$

(9) 25%, 40% 65% Compression Hardness (N/$\phi$100mm)

A specimen was cut into a size of 20 cm wide × 20 cm long × specimen thickness, and was left standing with no load for 24 hours under an environment of 23°C ± 2°C. The specimen was then placed in a universal tester (Instron universal tester manufactured by Instron Japan Co., Ltd.) that was under an environment of 23°C ± 2°C, and compression was started for the center of the specimen at a speed of 1 mm/min using a pressure plate having a diameter of $\phi$100mm, a thickness of 25 ± 1 mm, and a radius of curvature of 10 ± 1 mm at an edge portion of the bottom face and having a flat lower face. The thickness at the time when the universal tester detected a load of 0.4 N was measured as a hardness meter thickness. Taking the position of the pressure plate at this time as a zero point, and immediately after the measurement of the hardness meter thickness, the specimen was compressed to 75% of the hardness meter thickness at a speed of 10 mm/min, and then the pressure plate was immediately returned to the zero point at a speed of 10 mm/min. Subsequently, the specimen was immediately compressed to 25%, 40%, and 65% of the hardness meter thickness at a speed of 10 mm/min, and the loads at these times were measured as a 25% compression hardness, a 40% compression hardness, and a 65% compression hardness, respectively (unit: N/$\phi$100mm, average of n=3). The above measurement was performed for each of pressurization from the solid-section fiber main region side and pressurization from the hollow-section fiber main region side. Note that separate specimens were prepared and used for measurement of the compression hardness on the solid-section fiber main region side and measurement of the compression hardness on the hollow-section fiber main region side.

(10) Ratio between 25% Compression Hardness at Pressurization from Solid-Section Fiber Main Region Side and 25% Compression Hardness at Pressurization from Hollow-Section Fiber Main Region Side (-)

Using the 25% compression hardness at pressurization from each of the solid-section fiber main region side and the hollow-section fiber main region side measured in (9) above, the ratio was calculated according to the formula below depending on the following cases.

- When (25% compression hardness at pressurization from solid-section fiber main region side) ≥ (25% compression hardness at pressurization from hollow-section fiber main region side)

$$\text{(Ratio between 25\% compression hardness at pressurization from solid-section fiber main region side and 25\% compression hardness at pressurization from hollow-section fiber main region side)} = \text{(25\% compression hardness at pressurization from solid-section fiber main region side)} / \text{(25\% compression hardness at pressurization from hollow-section fiber main region side)}$$

- When (25% compression hardness at pressurization from solid-section fiber main region side) < (25% compression hardness at pressurization from hollow-section fiber main region side)

(Ratio between 25% compression hardness at pressurization from solid-section fiber main region side and 25% compression hardness at pressurization from hollow-section fiber main region side) = (25% compression hardness at pressurization from hollow-section fiber main region side) / (25% compression hardness at pressurization from solid-section fiber main region side)

(11) Ratio between 40% Compression Hardness at Pressurization from Solid-Section Fiber Main Region Side and 40% Compression Hardness at Pressurization from Hollow-Section Fiber Main Region Side (-)

Using the 40% compression hardness at pressurization from each of the solid-section fiber main region side and the hollow-section fiber main region side measured in (9) above, the ratio was calculated according to the formula below depending on the following cases.

- When (40% compression hardness at pressurization from solid-section fiber main region side) ≥ (40% compression hardness at pressurization from hollow-section fiber main region side)

(Ratio between 40% compression hardness at pressurization from solid-section fiber main region side and 40% compression hardness at pressurization from hollow-section fiber main region side) = (40% compression hardness at pressurization from solid-section fiber main region side) / (40% compression hardness at pressurization from hollow-section fiber main region side)

- When (40% compression hardness at pressurization from solid-section fiber main region side) < (40% compression hardness at pressurization from hollow-section fiber main region side)

(Ratio between 40% compression hardness at pressurization from solid-section fiber main region side and 40% compression hardness at pressurization from hollow-section fiber main region side) = (40% compression hardness at pressurization from hollow-section fiber main region side) / (40% compression hardness at pressurization from solid-section fiber main region side)

(12) Compression Deflection Coefficient (-)

The compression deflection coefficient was calculated according to the formulae below:

(Compression deflection coefficient at pressurization from solid-section fiber main region side) = (f) / (e)     (average of n=3)

(Compression deflection coefficient at pressurization from hollow-section fiber main region side) = (h) / (g)     (average of n=3)

where, as described in (9), (e) is the 25% compression hardness at pressurization from the solid-section fiber main region side, (f) is the 65% compression hardness at pressurization from the solid-section fiber main region side, (g) is the 25% compression hardness at pressurization from the hollow-section fiber main region side, and (h) is the 65% compression hardness at pressurization from the hollow-section fiber main region side.

(13) Difference between Compression Deflection Coefficient at Pressurization from Solid-Section Fiber Main Region Side and Compression Deflection Coefficient at Pressurization from Hollow-Section Fiber Main Region Side (-)

Using the compression deflection coefficients calculated in (12) above, the difference was calculated according to the formula below.

$$\text{(Difference between compression deflection coefficient at pressurization from solid-section fiber main region side and compression deflection coefficient at pressurization from hollow-section fiber main region)} = |\text{(Compression deflection coefficient at pressurization from solid-section fiber main region side)} - \text{(Compression deflection coefficient at pressurization from hollow-section fiber main region side)}|$$

(14) Hysteresis Loss (%)

A specimen was cut into a size of 20 cm wide × 20 cm long × specimen thickness, and was left standing with no load for 24 hours under an environment of 23 °C ± 2°C. The specimen was then placed in a universal tester (Instron universal tester manufactured by Instron Japan Co., Ltd.) that was under an environment of 23°C ± 2°C, and compression was started for the center of the specimen at a speed of 1 mm/min using a pressure plate having a diameter of ϕ100mm, a thickness of 25 ± 1 mm, and a radius of curvature of 10 ± 1 mm at an edge portion of the bottom face and having a flat lower face. The thickness at the time when the universal tester detected a load of 0.4 N was measured as a hardness meter thickness. Taking the position of the pressure plate at this time as a zero point, and immediately after the measurement of the hardness meter thickness, the specimen was compressed to 75% of the hardness meter thickness at a speed of 10 mm/min, and then the pressure plate was immediately returned to the zero point at a speed of 10 mm/min (first stress-strain curve). Immediately after the return to the zero point, the specimen was again compressed to 75% of the hardness meter thickness at a speed of 10 mm/min, and then the pressure plate was immediately returned to the zero point at the same speed (second stress-strain curve)

In the second stress-strain curve in Fig. 1A, using a compression energy (WC) indicated by a stress-strain curve at second compression in Fig. 1B and a compression energy (WC') indicated by a stress-strain curve at second decompression in Fig. 1C, hysteresis loss was determined according to the formula below.

$$\text{(Hysteresis loss)} = (WC - WC') / WC \times 100 \quad \text{(unit: \%)}$$

WC = ∫PdT (workload at compression from 0% to 75%)
WC' = ∫PdT (workload at decompression from 75% to 0%)

As a simplified way, when stress-strain curves as shown in Figs. 1A-1C, for example, are obtained, the hysteresis loss can be calculated by data analysis using a personal computer. As another way, with the area of the hatched portion being defined as WC and the area of the dotted portion as WC', the difference between these areas can be determined from the weight of the cut-out portion (average of n=3).

The measurement of the hysteresis loss was performed for each of pressurization from the solid-section fiber main region side and pressurization from the hollow-section fiber main region side. Note that separate specimens were prepared and used for measurement on the solid-section fiber main region side and measurement on the hollow-section fiber main region side.

(15) Difference between Hysteresis Loss at Pressurization from Solid-Section Fiber Main Region Side and Hysteresis Loss at Pressurization from Hollow-Section Fiber Main Region Side (point)

Using the hysteresis losses calculated in (14) above, the difference was calculated according to the formula below.

$$\text{(Difference between hysteresis loss at pressurization from solid-section fiber main region side and hysteresis loss at pressurization from hollow-section fiber main region side)} = | \text{(Hysteresis loss at pressurization from solid-section fiber main region side)} - \text{(Hysteresis loss at pressurization from hollow-section fiber main region side)} |$$

(unit: point)

[Example I-1]

As a polyester-based thermoplastic elastomer, dimethyl terephthalate (DMT) and 1,4-butanediol (1,4-BD) were put together with a small amount of a catalyst, and, after ester exchange by a usual way, subjected to polycondensation with addition of polytetramethylene glycol (PTMG) having an average molecular weight of 1000 while temperature rise and pressure reduction were being performed, to produce a polyether-ester block copolymerized elastomer. Thereafter, with addition of 1% of an antioxidant, the resultant elastomer was mixed and kneaded, then pelletized, and dried in a vacuum at 50°C for 48 hours, to obtain a polyester-based thermoplastic elastomer (A-1), which had a soft segment content of 40 wt% and a melting point of 198°C.

As a nozzle, used was one having a nozzle effective face having lengths of 50 cm in the width direction and 67.6 mm in the thickness direction, on which triple bridge hollow forming orifices having an outer size of 3 mm and an inner size of 2.6 mm were zigzag-arranged in the first to seventh rows in the thickness direction at a width-direction inter-hole pitch of 6 mm and a thickness-direction inter-hole pitch of 5.2 mm and solid forming orifices having an outer size of 1 mm were zigzag-arranged in the eighth to fourteenth rows in the thickness direction at a width-direction inter-hole pitch of 6 mm and a thickness-direction inter-hole pitch of 5.2 mm. The obtained polyester-based thermoplastic elastomer (A-1) was discharged downward from the nozzle at a spinning temperature (melting temperature) of 240°C at a single-hole discharge rate of 1.5 g/min for hollow holes and a single-hole discharge rate of 0.9 g/min for solid holes. Cooling water was provided at a position 28 cm below the nozzle face. Endless nets made of stainless steel each having a width of 60 cm were placed in parallel at a spacing of 52 mm in opening width to form a pair of take-up conveyor nets so as to be partially exposed over a water surface. Above the conveyer nets over the water surface, the discharged filaments in a molten state were curled to form loops, and contact portions were fused together to form a three-dimensional net-like structure. The net-like structure in a molten state was sandwiched at both faces by the take-up conveyor nets, and drawn into the cooling water at a take-up speed of 1.14 m/min, thereby solidified to be flattened at both faces in the thickness direction, then cut into a predetermined size, and dried/heated with 110°C hot air for 15 minutes, to obtain a net-like structure.

The obtained net-like structure was a net-like structure having a solid-section fiber main region mainly including solid-section fibers, a hollow-section fiber main region mainly including hollow-section fibers, and a mixed region including solid-section fibers and hollow-section fibers in a mixed state, located between the solid-section fiber main region and the hollow-section fiber main region, where these regions were integrated, not separated from one another. The hollow-section fibers were formed of hollow linear bodies having a triangular rice-ball shaped hollow cross section, a hollowness of 20%, and a fiber size of 0.76 mm, and the solid-section fibers were formed of solid linear bodies having a fiber size of 0.50 mm. The difference in fiber size was 0.26 mm, the total weight ratio of the solid-section fibers was 38%, the apparent density was 0.055 g/cm$^3$, and the thickness of flattened surface was 50 mm.

The hollow-section fiber main region-side residual strain was 6.7%, the solid-section fiber main region-side residual strain was 5.7%, and the difference between the solid-section fiber main region-side residual strain and the hollow-section fiber main region-side residual strain was 1.0 point. The 25% compression hardness at pressurization from the hollow-section fiber main region side was 45.1 N/φ100mm, the 25% compression hardness at pressurization from the solid-section fiber main region side was 32.1 N/φ100mm, the ratio between the 25% compression hardness at pressurization from the solid-section fiber main region side and the 25% compression hardness at pressurization from the hollow-section fiber main region side was 1.40, the 40% compression hardness at pressurization from the hollow-section fiber main region side was 75.1 N/φ100mm, the 40% compression hardness at pressurization from the solid-section fiber main region side was 61.3 N/φ100mm, the ratio between the 40% compression hardness at pressurization from the solid-section fiber main region side and the 40% compression hardness at pressurization from the hollow-section fiber main region side was 1.23, the compression deflection coefficient at pressurization from the hollow-section fiber main region side was 4.07, the compression deflection coefficient at pressurization from the solid-section fiber main region side was 5.99, the difference between the compression deflection coefficient at pressurization from the solid-section fiber main region side and the compression deflection coefficient at pressurization from the hollow-section fiber main region side was 1.92, the hysteresis loss at pressurization from the hollow-section fiber main region side was 23.7%, the hysteresis loss at pressurization from the solid-section fiber main region side was 26.2%, and the difference between the hysteresis loss at pressurization from the solid-section fiber main region side and the hysteresis loss at pressurization from the hollow-section fiber main region side was 2.5 points. The properties of the obtained net-like structure are shown in Table 1.

As shown in Table 1, in the net-like structure obtained in this example, the residual strains after 750 N constant load repeated compression on the hollow-section fiber main region side and the solid-section fiber main region side were less than or equal to 20% with the difference therebetween being less than or equal to 10 points, the difference in compression deflection coefficient between the hollow-section fiber main region side and the solid-section fiber main region side was less than or equal to 5, and the hysteresis losses on the hollow-section fiber main region side and the solid-section fiber main region side were less than or equal to 30% with the difference therebetween being less than or equal to 5 points, which were all small. Therefore, the difference in compression durability between both faces was small. Also, in the net-like structure obtained in this example, the ratio in 25% compression hardness between the hollow-section fiber main region side and the solid-section fiber main region side was greater than or equal to 1.03, and the ratio in 40% compression hardness between the hollow-section fiber main region side and the solid-section fiber main region side was greater than or equal to 1.05, which were both large. Therefore, cushioning performance different between both faces was imparted. That is, the net-like structure obtained in this example was an excellent net-like structure that satisfied the requirements of the present invention, was small in difference in compression durability between both faces, and was provided with cushioning performance different between both faces.

[Example I-2]

A net-like structure was obtained in the same manner as in Example I-1 except that cooling water was provided at a position 32 cm below the nozzle face. The obtained net-like structure was a net-like structure having a solid-section fiber main region mainly including solid-section fibers, a hollow-section fiber main region mainly including hollow-section fibers, and a mixed region including solid-section fibers and hollow-section fibers in a mixed state, located between the solid-section fiber main region and the hollow-section fiber main region, where these regions were integrated, not separated from one another. The hollow-section fibers were formed of hollow linear bodies having a triangular rice-ball shaped hollow cross section, a hollowness of 20%, and a fiber size of 0.55 mm, and the solid-section fibers were formed of solid linear bodies having a fiber size of 0.42 mm. The difference in fiber size was 0.13 mm, the total weight ratio of the solid-section fibers was 38%, the apparent density was 0.054 g/cm$^3$, and the thickness of flattened surface was 48 mm.

The hollow-section fiber main region-side residual strain was 6.1%, the solid-section fiber main region-side residual strain was 12.1%, and the difference between the solid-section fiber main region-side residual strain and the hollow-section fiber main region-side residual strain was 6.0 points. The 25% compression hardness at pressurization from the hollow-section fiber main region side was 39.7 N/$\phi$100mm, the 25% compression hardness at pressurization from the solid-section fiber main region side was 25.7 N/$\phi$100mm, the ratio between the 25% compression hardness at pressurization from the solid-section fiber main region side and the 25% compression hardness at pressurization from the hollow-section fiber main region side was 1.54, the 40% compression hardness at pressurization from the hollow-section fiber main region side was 85.6 N/$\phi$100mm, the 40% compression hardness at pressurization from the solid-section fiber main region side was 52.1 N/$\phi$100mm, the ratio between the 40% compression hardness at pressurization from the solid-section fiber main region side and the 40% compression hardness at pressurization from the hollow-section fiber main region side was 1.64, the compression deflection coefficient at pressurization from the hollow-section fiber main region side was 3.80, the compression deflection coefficient at pressurization from the solid-section fiber main region side was 7.72, the difference between the compression deflection coefficient at pressurization from the solid-section fiber main region side and the compression deflection coefficient at pressurization from the hollow-section fiber main region side was 3.92, the hysteresis loss at pressurization from the hollow-section fiber main region side was 25.9%, the hysteresis loss at pressurization from the solid-section fiber main region side was 25.7%, and the difference between the hysteresis loss at pressurization from the solid-section fiber main region side and the hysteresis loss at pressurization from the hollow-section fiber main region side was 0.2 points. The properties of the obtained net-like structure are shown in Table 1.

As shown in Table 1, in the net-like structure obtained in this example, the residual strains after 750 N constant load repeated compression on the hollow-section fiber main region side and the solid-section fiber main region side were less than or equal to 20% with the difference therebetween being less than or equal to 10 points, the difference in compression deflection coefficient between the hollow-section fiber main region side and the solid-section fiber main region side was less than or equal to 5, and the hysteresis losses on the hollow-section fiber main region side and the solid-section fiber main region side were less than or equal to 30% with the difference therebetween being less than or equal to 5 points, which were all small. Therefore, the difference in compression durability between both faces was small. Also, in the net-like structure obtained in this example, the ratio in 25% compression hardness between the hollow-section fiber main region side and the solid-section fiber main region side was greater than or equal to 1.03, and the ratio in 40% compression hardness between the hollow-section fiber main region side and the solid-section fiber main region side was greater than or equal to 1.05, which were both large. Therefore, cushioning performance different between both faces was imparted. That is, the net-like structure obtained in this example was an excellent net-like structure that satisfied the requirements of the present invention, was small in difference in compression durability between both faces, and was provided with cushioning performance different between both faces.

[Example I-3]

As a nozzle, used was one having a nozzle effective face having lengths of 50 cm in the width direction and 57.2 mm in the thickness direction, on which triple bridge hollow forming orifices having an outer size of 3 mm and an inner size of 2.6 mm were zigzag-arranged in the first to seventh rows in the thickness direction at a width-direction inter-hole pitch of 6 mm and a thickness-direction inter-hole pitch of 5.2 mm and solid forming orifices having an outer size of 1 mm were zigzag-arranged in the eighth to twelfth rows in the thickness direction at a width-direction inter-hole pitch of 6 mm and a thickness-direction inter-hole pitch of 5.2 mm. The obtained polyester-based thermoplastic elastomer (A-1) was discharged downward from the nozzle at a spinning temperature (melting temperature) of 240°C at a single-hole discharge rate of 1.8 g/min for hollow holes and a single-hole discharge rate of 1.1 g/min for solid holes. Cooling water was provided at a position 23 cm below the nozzle face. Endless nets made of stainless steel each having a width of 60 cm were placed in parallel at a spacing of 42 mm in opening width to form a pair of take-up conveyor nets so as to be partially exposed over a water surface. Above the conveyer nets over the water surface, the discharged filaments in a molten state were curled to form loops, and contact portions were fused together to form a three-dimensional net-like structure. The net-like structure in a molten state was sandwiched at both faces by the take-up conveyor nets, and drawn into the cooling water at a take-up speed of 1.74 m/min, thereby solidified to be flattened at both faces in the thickness direction, then cut into a predetermined size, and dried/heated with 110°C hot air for 15 minutes, to obtain a net-like structure.

The obtained net-like structure was a net-like structure having a solid-section fiber main region mainly including solid-section fibers, a hollow-section fiber main region mainly including hollow-section fibers, and a mixed region including solid-section fibers and hollow-section fibers in a mixed state, located between the solid-section fiber main region and the hollow-section fiber main region, where these regions were integrated, not separated from one another. The hollow-section fibers were formed of hollow linear bodies having a triangular rice-ball shaped hollow cross section, a hollowness of 23%, and a fiber size of 0.81 mm, and the solid-section fibers were formed of solid linear bodies having a fiber size of 0.56 mm. The difference in fiber size was 0.25 mm, the total weight ratio of the solid-section fibers was 30%, the apparent density was 0.044 g/cm$^3$, and the thickness of flattened surface was 40 mm.

The hollow-section fiber main region-side residual strain was 6.0%, the solid-section fiber main region-side residual strain was 4.9%, and the difference between the solid-section fiber main region-side residual strain and the hollow-section fiber main region-side residual strain was 1.1 points. The 25% compression hardness at pressurization from the hollow-section fiber main region side was 18.2 N/ϕ100mm, the 25% compression hardness at pressurization from the solid-section fiber main region side was 17.7 N/ϕ100mm, the ratio between the 25% compression hardness at pressurization from the solid-section fiber main region side and the 25% compression hardness at pressurization from the hollow-section fiber main region side was 1.03, the 40% compression hardness at pressurization from the hollow-section fiber main region side was 37.6 N/ϕ100mm, the 40% compression hardness at pressurization from the solid-section fiber main region side was 34.9 N/ϕ100mm, the ratio between the 40% compression hardness at pressurization from the solid-section fiber main region side and the 40% compression hardness at pressurization from the hollow-section fiber main region side was 1.08, the compression deflection coefficient at pressurization from the hollow-section fiber main region side was 5.31, the compression deflection coefficient at pressurization from the solid-section fiber main region side was 5.59, the difference between the compression deflection coefficient at pressurization from the solid-section fiber main region side and the compression deflection coefficient at pressurization from the hollow-section fiber main region side was 0.28 points, the hysteresis loss at pressurization from the hollow-section fiber main region side was 25.7%, the hysteresis loss at pressurization from the solid-section fiber main region side was 27.1%, and the difference between the hysteresis loss at pressurization from the solid-section fiber main region side and the hysteresis loss at pressurization from the hollow-section fiber main region side was 1.4 points. The properties of the obtained net-like structure are shown in Table 1.

As shown in Table 1, in the net-like structure obtained in this example, the residual strains after 750 N constant load repeated compression on the hollow-section fiber main region side and the solid-section fiber main region side were less than or equal to 20% with the difference therebetween being less than or equal to 10 points, the difference in compression deflection coefficient between the hollow-section fiber main region side and the solid-section fiber main region side was less than or equal to 5, and the hysteresis losses on the hollow-section fiber main region side and the solid-section fiber main region side were less than or equal to 30% with the difference therebetween being less than or equal to 5 points, which were all small. Therefore, the difference in compression durability between both faces was small.

Also, in the net-like structure obtained in this example, the ratio in 25% compression hardness between the hollow-section fiber main region side and the solid-section fiber main region side was greater than or equal to 1.03, and the ratio in 40% compression hardness between the hollow-section fiber main region side and the solid-section fiber main region side was greater than or equal to 1.05, which were both large. Therefore, cushioning performance different between both faces was imparted. That is, the net-like structure obtained in this example was an excellent net-like structure that satisfied the requirements of the present invention, was small in difference in compression durability between both faces, and was provided with cushioning performance different between both faces.

[Example I-4]

As a nozzle, used was one having a nozzle effective face having lengths of 50 cm in the width direction and 67.6 mm in the thickness direction, on which triple bridge hollow forming orifices having an outer size of 3 mm and an inner size of 2.6 mm were zigzag-arranged in the first to seventh rows in the thickness direction at a width-direction inter-hole pitch of 6 mm and a thickness-direction inter-hole pitch of 5.2 mm and solid forming orifices having an outer size of 1.2 mm were zigzag-arranged in the eighth to thirteenth rows in the thickness direction at a width-direction inter-hole pitch of 7 mm and a thickness-direction inter-hole pitch of 6.1 mm. The obtained polyester-based thermoplastic elastomer (A-1) was discharged downward from the nozzle at a spinning temperature (melting temperature) of 240°C at a single-hole discharge rate of 1.1 g/min for hollow holes and a single-hole discharge rate of 1.1 g/min for solid holes. Cooling water was provided at a position 28 cm below the nozzle face. Endless nets made of stainless steel each having a width of 60 cm were placed in parallel at a spacing of 52 mm in opening width to form a pair of take-up conveyor nets so as to be partially exposed over a water surface. Above the conveyer nets over the water surface, the discharged filaments in a molten state were curled to form loops, and contact portions were fused together to form a three-dimensional net-like structure. The net-like structure in a molten state was sandwiched at both faces by the take-up conveyor nets, and drawn into the cooling water at a take-up speed of 1.14 m/min, thereby solidified to be flattened at both faces in the thickness direction, then cut into a predetermined size, and dried/heated with 110°C hot air for 15 minutes, to obtain a net-like structure.

The obtained net-like structure was a net-like structure having a solid-section fiber main region mainly including solid-section fibers, a hollow-section fiber main region mainly including hollow-section fibers, and a mixed region including solid-section fibers and hollow-section fibers in a mixed state, located between the solid-section fiber main region and the hollow-section fiber main region, where these regions were integrated, not separated from one another. The hollow-section fibers were formed of hollow linear bodies having a triangular rice-ball shaped hollow cross section, a hollowness of 18%, and a fiber size of 0.67 mm, and the solid-section fibers were formed of solid linear bodies having a fiber size of 0.60 mm. The difference in fiber size was 0.07 mm, the total weight ratio of the solid-section fibers was 47%, the apparent density was 0.044 g/cm$^3$, and the thickness of flattened surface was 50 mm.

The hollow-section fiber main region-side residual strain was 6.6%, the solid-section fiber main region-side residual strain was 7.0%, and the difference between the solid-section fiber main region-side residual strain and the hollow-section fiber main region-side residual strain was 0.4 points. The 25% compression hardness at pressurization from the hollow-section fiber main region side was 41.2 N/$\phi$100mm, the 25% compression hardness at pressurization from the solid-section fiber main region side was 37.3 N/$\phi$100mm, the ratio between the 25% compression hardness at pressurization from the solid-section fiber main region side and the 25% compression hardness at pressurization from the hollow-section fiber main region side was 1.10, the 40% compression hardness at pressurization from the hollow-section fiber main region side was 69.0 N/$\phi$100mm, the 40% compression hardness at pressurization from the solid-section fiber main region side was 65.5 N/$\phi$100mm, the ratio between the 40% compression hardness at pressurization from the solid-section fiber main region side and the 40% compression hardness at pressurization from the hollow-section fiber main region side was 1.05, the compression deflection coefficient at pressurization from the hollow-section fiber main region side was 4.51, the compression deflection coefficient at pressurization from the solid-section fiber main region side was 4.74, the difference between the compression deflection coefficient at pressurization from the solid-section fiber main region side and the compression deflection coefficient at pressurization from the hollow-section fiber main region side was 0.23 points, the hysteresis loss at pressurization from the hollow-section fiber main region side was 23.1%, the hysteresis loss at pressurization from the solid-section fiber main region side was 23.5%, and the difference between the hysteresis loss at pressurization from the solid-section fiber main region side and the hysteresis loss at pressurization from the hollow-section fiber main region side was 0.4 points. The properties of the obtained net-like structure are shown in Table 1.

As shown in Table 1, in the net-like structure obtained in this example, the residual strains after 750 N constant load repeated compression on the hollow-section fiber main region side and the solid-section fiber main region side were less than or equal to 20% with the difference therebetween being less than or equal to 10 points, the difference in compression deflection coefficient between the hollow-section fiber main region side and the solid-section fiber main region side was less than or equal to 5, and the hysteresis losses on the hollow-section fiber main region side and the solid-section fiber main region side were less than or equal to 30% with the difference therebetween being less than or equal to 5 points, which were all small. Therefore, the difference in compression durability between both faces was small. Also, in the net-like structure obtained in this example, the ratio in 25% compression hardness between the hollow-section fiber main region side and the solid-section fiber main region side was greater than or equal to 1.03, and the ratio in 40% compression hardness between the hollow-section fiber main region side and the solid-section fiber main region side was greater than or equal to 1.05, which were both large. Therefore, cushioning performance different between both faces was imparted. That is, the net-like structure obtained in this example was an excellent net-like structure that satisfied the requirements of the present invention, was small in difference in compression durability between both faces, and was provided with cushioning performance different between both faces.

[Comparative Example I-R1]

As a nozzle, used was one having a nozzle effective face having lengths of 50 cm in the width direction and 67.6 mm in the thickness direction, on which triple bridge hollow forming orifices having an outer size of 3 mm and an inner size of 2.6 mm were zigzag-arranged in the first to eighth rows at a width-direction inter-hole pitch of 10 mm and a thickness-direction inter-hole pitch of 7.5 mm and solid forming orifices having an outer size of 0.7 mm were zigzag-arranged in the ninth to eleventh rows at a width-direction inter-hole pitch of 2.5 mm and a thickness-direction inter-hole pitch of 3.7 mm. The obtained polyester-based thermoplastic elastomer (A-1) was discharged downward from the nozzle at a spinning temperature (melting temperature) of 240°C at a single-hole discharge rate of 2.0 g/min for hollow holes, a single-hole discharge rate of 0.5 g/min for solid holes, and a whole discharge rate of 1100 g/min. Cooling water was provided at a position 18 cm below the nozzle face. Endless nets made of stainless steel each having a width of 60 cm were placed in parallel at a spacing of 50 mm in opening width to form a pair of take-up conveyor nets so as to be partially exposed over a water surface. Above the conveyer nets over the water surface, the discharged filaments in a molten state were curled to form loops, and contact portions were fused together to form a three-dimensional net-like structure. The net-like structure in a molten state was sandwiched at both faces by the take-up conveyor nets, and drawn into the cooling water at a take-up speed of 1.00 m/min, thereby solidified, then cut into a predetermined size, and dried/heated with 110°C hot air for 15 minutes, to obtain a net-like structure.

The obtained net-like structure was a net-like structure having a solid-section fiber main region mainly including solid-section fibers and a hollow-section fiber main region mainly including hollow-section fibers, where these regions were integrated, not separated from each other. In the obtained net-like structure, the width-direction inter-hole pitch of the hollow forming orifices and the width-direction inter-hole pitch of the solid forming orifices were so different from each other that loops of hollow-section fibers failed to make their ways into between loops of solid-section fibers, resulting in no presence of a region including solid-section fibers and hollow-section fibers in a mixed state to form a thickness.

The hollow-section fibers were formed of hollow linear bodies having a triangular rice-ball shaped hollow cross section, a hollowness of 28%, and a fiber size of 0.80 mm, and the solid-section fibers were formed of solid linear bodies having a fiber size of 0.32 mm. The difference in fiber size was 0.48 mm, the total weight ratio of the solid-section fibers was 27%, the apparent density was 0.046 g/cm$^3$, and the thickness of flattened surface was 50 mm.

The hollow-section fiber main region-side residual strain was 5.3%, the solid-section fiber main region-side residual strain was 15.6%, and the difference between the solid-section fiber main region-side residual strain and the hollow-section fiber main region-side residual strain was 10.3 points. The 25% compression hardness at pressurization from the hollow-section fiber main region side was 22.7 N/$\phi$100mm, the 25% compression hardness at pressurization from the solid-section fiber main region side was 21.9 N/$\phi$100mm, the ratio between the 25% compression hardness at pressurization from the solid-section fiber main region side and the 25% compression hardness at pressurization from the hollow-section fiber main region side was 1.04, the 40% compression hardness at pressurization from the hollow-section fiber main region side was 41.1 N/$\phi$100mm, the 40% compression hardness at pressurization from the solid-section fiber main region side was 40.3 N/$\phi$100mm, the ratio between the 40% compression hardness at pressurization from the solid-section fiber main region side and the 40% compression hardness at pressurization from the hollow-section fiber main region side was 1.02, the compression deflection coefficient at pressurization from the hollow-section fiber main region side was 3.80, the compression deflection coefficient at pressurization from the solid-section fiber main region side was 3.62, the difference between the compression deflection coefficient at pressurization from the solid-section fiber main region side and the compression deflection coefficient at pressurization from the hollow-section fiber main region side was 0.18 points, the hysteresis loss at pressurization from the hollow-section fiber main region side was 23.1%, the hysteresis loss at pressurization from the solid-section fiber main region side was 23.8%, and the difference between the hysteresis loss at pressurization from the solid-section fiber main region side and the hysteresis loss at pressurization from the hollow-section fiber main region side was 0.7 points. The properties of the obtained net-like structure are shown in Table 1.

As shown in Table 1, in the net-like structure obtained in this comparative example, the difference in residual strain after 750 N constant load repeated compression between the hollow-section fiber main region side and the solid-section fiber main region side was greater than 10 points. Therefore, the difference in compression durability between both faces was large. That is, the net-like structure obtained in this comparative example was a net-like structure that did not satisfy the requirements of the present invention and was large in difference in compression durability between both faces.

[Comparative Example I-R2]

As a nozzle, used was one having a nozzle effective face having lengths of 1000 mm in the width direction and 31.2 mm in the thickness direction, on which orifices of a triple bridge hollow formative cross section having an outer size of 3 mm and an inner size of 2.6 mm were zigzag-arranged at a width-direction inter-hole pitch of 6 mm and a thickness-direction inter-hole pitch of 5.2 mm in 7 rows in the thickness direction. The obtained polyester-based thermoplastic elastomer (A-1) was discharged downward from the nozzle at a spinning temperature (melting temperature) of 240°C at a single-hole discharge rate of 1.5 g/min. Cooling water was provided at a position 28 cm below the nozzle face. Endless nets made of stainless steel each having a width of 2000 mm were placed in parallel at a spacing of 27 mm in opening width to form a pair of take-up conveyor nets so as to be partially exposed over a water surface. Above the conveyer nets over the water surface, the discharged filaments in a molten state were curled to form loops, and contact portions were fused together to form a three-dimensional net-like structure. The net-like structure in a molten state was sandwiched at both faces by the take-up conveyor nets, and drawn into the cooling water at a take-up speed of 1.14 m/min, thereby solidified to be flattened at both faces in the thickness direction, then cut into a predetermined size, and dried/heated with 110°C hot air for 15 minutes, to obtain a net-like structure mainly including hollow-section fibers having a triangular rice-ball shaped cross section. The obtained net-like structure had an apparent density of 0.063 g/cm$^3$ and a thickness of flattened surface of 25 mm, and the hollow-section fibers had a hollowness of 20% and a fiber size of 0.76 mm.

Also, as a nozzle, used was one having a nozzle effective face having lengths of 1000 mm in the width direction and 31.2 mm in the thickness direction, on which solid forming orifices having an outer size of 1 mm were zigzag-arranged at a width-direction inter-hole pitch of 6 mm and a thickness-direction inter-hole pitch of 5.2 mm in 7 rows in the thickness direction. The obtained polyester-based thermoplastic elastomer (A-1) was discharged downward from the nozzle at a spinning temperature (melting temperature) of 240°C at a single-hole discharge rate of 0.9 g/min. Cooling water was provided at a position 28 cm below the nozzle face. Endless nets made of stainless steel each having a width of 2000 mm were placed in parallel at a spacing of 27 mm in opening width to form a pair of take-up conveyor nets so as to be partially exposed over a water surface. Above the conveyer nets over the water surface, the discharged filaments in a molten state were curled to form loops, and contact portions were fused together to form a three-dimensional net-like structure. The net-like structure in a molten state was sandwiched at both faces by the take-up conveyor nets, and drawn into the cooling water at a take-up speed of 1.14 m/min, thereby solidified to be flattened at both faces in the thickness direction, then cut into a predetermined size, and dried/heated with 110°C hot air for 15 minutes, to obtain a net-like structure mainly including solid-section fibers. The obtained net-like structure had an apparent density of 0.038 g/cm$^3$ and a thickness of flattened surface of 25 mm, and the solid-section fibers had a fiber size of 0.50 mm.

The obtained net-like structure mainly including solid-section fibers and the net-like structure mainly including solid-section fibers were stacked on each other, to form a net-like structure. The entire stacked net-like structure had an apparent density of 0.051 g/cm$^3$ and a thickness of 50 mm. The difference between the fiber size of the hollow-section fibers and the fiber size of the solid-section fibers was 0.26 mm.

In the stacked net-like structure, the hollow-section fiber main region-side residual strain was 6.3%, the solid-section fiber main region-side residual strain was 17.3%, and the difference between the solid-section fiber main region-side residual strain and the hollow-section fiber main region-side residual strain was 11.0 points. The 25% compression hardness at pressurization from the hollow-section fiber main region side was 45.1 N/φ 100mm, the 25% compression hardness at pressurization from the solid-section fiber main region side was 32.1 N/φ100mm, the ratio between the 25% compression hardness at pressurization from the solid-section fiber main region side and the 25% compression hardness at pressurization from the hollow-section fiber main region side was 1.40, the 40% compression hardness at pressurization from the hollow-section fiber main region side was 75.1 N/φ100mm, the 40% compression hardness at pressurization from the solid-section fiber main region side was 61.3 N/φ100mm, the ratio between the 40% compression hardness at pressurization from the solid-section fiber main region side and the 40% compression hardness at pressurization from the hollow-section fiber main region side was 1.23, the compression deflection coefficient at pressurization from the hollow-section fiber main region side was 4.07, the compression deflection coefficient at pressurization from the solid-section fiber main region side was 5.99, the difference between the compression deflection coefficient at pressurization from the solid-section fiber main region side and the compression deflection coefficient at pressurization from the hollow-section fiber main region side was 1.92 points, the hysteresis loss at pressurization from the hollow-section fiber main region side was 23.7%, the hysteresis loss at pressurization from the solid-section fiber main region side was 26.2%, and the difference between the hysteresis loss at pressurization from the solid-section fiber main region side and the hysteresis loss at pressurization from the hollow-section fiber main region side was 2.5 points. The properties of the obtained net-like structure are shown in Table 1.

As shown in Table 1, in the net-like structure obtained in this comparative example, the difference in residual strain after 750 N constant load repeated compression between the hollow-section fiber main region side and the solid-section fiber main region side was greater than 10 points. Therefore, the difference in compression durability between both faces was large. That is, the net-like structure obtained in this comparative example was a net-like structure that did not satisfy the requirements of the present invention and was large in difference in compression durability between both faces.

[Table 1]

| | | | Example I-1 | Example I-2 | Example I-3 | Example I-4 | Comparative Example I-R1 | Comparative Example I-R2 |
|---|---|---|---|---|---|---|---|---|
| Thermoplastic elastomer | | | (A-1) | (A-1) | (A-1) | (A-1) | (A-1) | (A-1) |
| Spinning temperature | | (°C) | 240 | 240 | 240 | 240 | 240 | 240 |
| Single-hole discharge rate | Hollow holes | (g/min) | 1.5 | 1.5 | 1.8 | 1.1 | 2.0 | 1.5 |
| | Solid holes | (g/min) | 0.9 | 0.9 | 1.1 | 1.1 | 0.5 | 0.9 |
| Nozzle face-cooling water distance | | (cm) | 28 | 32 | 23 | 28 | 18 | 28 |
| Take-up speed | | (m/min) | 1.14 | 1.14 | 1.74 | 1.14 | 1.00 | 1.14 |
| Fiber size | Hollow-section fibers | (mm) | 0.76 | 0.55 | 0.81 | 0.67 | 0.80 | 0.76 |
| | Solid-section fibers | (mm) | 0.50 | 0.42 | 0.56 | 0.60 | 0.32 | 0.50 |
| | Difference in fiber size | (mm) | 0.26 | 0.13 | 0.25 | 0.07 | 0.48 | 0.26 |
| Hollowness of hollow-section fibers | | (%) | 20 | 20 | 23 | 18 | 28 | 20 |
| Total weight ratio of solid-section fibers | | (%) | 38 | 38 | 30 | 47 | 27 | - |
| Apparent density | | (g/cm³) | 0.055 | 0.054 | 0.044 | 0.044 | 0.046 | 0.051*[1] |
| Thickness | | (mm) | 50 | 48 | 40 | 50 | 50 | 50*[1] |
| Residual strain after 750N constant load repeated compression | Hollow-section fiber main region side | (%) | 6.7 | 6.1 | 6.0 | 6.6 | 5.3 | 6.3 |
| | Solid-section fiber main region side | (%) | 5.7 | 12.1 | 4.9 | 7.0 | 15.6 | 17.3 |
| | Difference between two sides | (Point) | 1.0 | 6.0 | 1.1 | 0.4 | 10.3 | 11.0 |
| 25% compression hardness | Hollow-section fiber main region side | (N/φ100 mm) | 45.1 | 39.7 | 18.2 | 41.2 | 22.7 | 45.1 |
| | Solid-section fiber main region side | (N/φ100 mm) | 32.1 | 25.7 | 17.7 | 37.3 | 21.9 | 32.1 |
| | Ratio between two sides | (-) | 1.40 | 1.54 | 1.03 | 1.10 | 1.04 | 1.40 |

EP 3 290 556 B1

| | | | Example I-1 | Example I-2 | Example I-3 | Example I-4 | Comparative Example I-R1 | Comparative Example I-R2 |
|---|---|---|---|---|---|---|---|---|
| 40% compression hardness | Hollow-section fiber main region side | (N/$\phi$100 mm) | 75.1 | 85.6 | 37.6 | 69.0 | 41.1 | 75.1 |
| | Solid-section fiber main reon side | (N/$\phi$100 mm) | 61.3 | 52.1 | 34.9 | 65.5 | 40.3 | 61.3 |
| | Ratio between two sides | (-) | 1.23 | 1.64 | 1.08 | 1.05 | 1.02 | 1.23 |
| Compression deflection coefficient | Hollow-section fiber main region side | (-) | 4.07 | 3.80 | 5.31 | 4.51 | 3.80 | 4.07 |
| | Solid-section fiber main region side | (-) | 5.99 | 7.72 | 5.59 | 4.74 | 3.62 | 5.99 |
| | Difference between two sides | (-) | 1.92 | 3.92 | 0.28 | 0.23 | 0.18 | 1.92 |
| Hysteresis loss | Hollow-section fiber main region side | (%) | 23.7 | 25.9 | 25.7 | 23.1 | 23.1 | 23.7 |
| | Solid-section fiber main region side | (%) | 26.2 | 25.7 | 27.1 | 23.5 | 23.8 | 26.2 |
| | Difference between two sides | (Point) | 2.5 | 0.2 | 1.4 | 0.4 | 0.7 | 2.5 |
| *1: Value in the state of stacking of 2 net-like structures | | | | | | | | |

[Example II-1]

As a nozzle, used was one having a nozzle effective face having lengths of 50 cm in the width direction and 67.6 mm in the thickness direction, on which triple bridge hollow forming orifices having an outer size of 3 mm and an inner size of 2.6 mm were zigzag-arranged in the first to seventh rows in the thickness direction at a width-direction inter-hole pitch of 6 mm and a thickness-direction inter-hole pitch of 5.2 mm and solid forming orifices having an outer size of 1 mm were zigzag-arranged in the eighth to fourteenth rows in the thickness direction at a width-direction inter-hole pitch of 6 mm and a thickness-direction inter-hole pitch of 5.2 mm. INFUSE D9530.05 (manufactured by Dow Chemical Company), a multi-block copolymer constituted of ethylene-$\alpha$-olefin, 100 wt%, was used as a polyolefin-based thermoplastic elastomer (B-1), discharged downward from the nozzle at a spinning temperature (melting temperature) of 240°C at a single-hole discharge rate of 1.8 g/min for hollow holes and a single-hole discharge rate of 1.1 g/min for solid holes. Cooling water was provided at a position 30 cm below the nozzle face. Endless nets made of stainless steel each having a width of 60 cm were placed in parallel at a spacing of 50 mm in opening width to form a pair of take-up conveyor nets so as to be partially exposed over a water surface. Above the conveyer nets over the water surface, the discharged filaments in a molten state were curled to form loops, and contact portions were fused together to form a three-dimensional net-like structure. The net-like structure in a molten state was sandwiched at both faces by the take-up conveyor nets, and drawn into the cooling water at a take-up speed of 1.43 m/min, thereby solidified to be flattened at both faces in the thickness direction, then cut into a predetermined size, and dried/heated with 70°C hot air for 15 minutes, to obtain a net-like structure.

The obtained net-like structure was a net-like structure having a solid-section fiber main region mainly including solid-section fibers, a hollow-section fiber main region mainly including hollow-section fibers, and a mixed region including solid-section fibers and hollow-section fibers in a mixed state, located between the solid-section fiber main region and the hollow-section fiber main region, where these regions were integrated, not separated from one another. The hollow-section fibers were formed of hollow linear bodies having a triangular rice-ball shaped hollow cross section, a hollowness of 30%, and a fiber size of 1.13 mm, and the solid-section fibers were formed of solid linear bodies having a fiber size of 0.52 mm. The difference in fiber size was 0.61 mm, the total weight ratio of the solid-section fibers was 37%, the apparent density was 0.043 g/cm$^3$, and the thickness of flattened surface was 45 mm.

The hollow-section fiber main region-side residual strain was 11.4%, the solid-section fiber main region-side residual strain was 13.5%, and the difference between the solid-section fiber main region-side residual strain and the hollow-section fiber main region-side residual strain was 2.1 points. The 25% compression hardness at pressurization from the hollow-section fiber main region side was 11.0 N/$\phi$ 100mm, the 25% compression hardness at pressurization from the solid-section fiber main region side was 6.2 N/$\phi$100mm, the ratio between the 25% compression hardness at pressurization from the solid-section fiber main region side and the 25% compression hardness at pressurization from the hollow-section fiber main region side was 1.77, the 40% compression hardness at pressurization from the hollow-section fiber main region side was 22.2 N/$\phi$100mm, the 40% compression hardness at pressurization from the solid-section fiber main region side was 19.1 N/$\phi$100mm, the ratio between the 40% compression hardness at pressurization from the solid-section fiber main region side and the 40% compression hardness at pressurization from the hollow-section fiber main region side was 1.16, the compression deflection coefficient at pressurization from the hollow-section fiber main region side was 4.63, the compression deflection coefficient at pressurization from the solid-section fiber main region side was 7.59, the difference between the compression deflection coefficient at pressurization from the solid-section fiber main region side and the compression deflection coefficient at pressurization from the hollow-section fiber main region side was 2.96, the hysteresis loss at pressurization from the hollow-section fiber main region side was 42.6%, the hysteresis loss at pressurization from the solid-section fiber main region side was 44.8%, and the difference between the hysteresis loss at pressurization from the solid-section fiber main region side and the hysteresis loss at pressurization from the hollow-section fiber main region side was 2.2 points. The properties of the obtained net-like structure are shown in Table 2.

As shown in Table 2, in the net-like structure obtained in this example, the residual strains after 750 N constant load repeated compression on the hollow-section fiber main region side and the solid-section fiber main region side were less than or equal to 20% with the difference therebetween being less than or equal to 10 points, the difference in compression deflection coefficient between the hollow-section fiber main region side and the solid-section fiber main region side was less than or equal to 5, and the hysteresis losses on the hollow-section fiber main region side and the solid-section fiber main region side were less than or equal to 60% with the difference therebetween being less than or equal to 5 points, which were all small. Therefore, the difference in compression durability between both faces was small. Also, in the net-like structure obtained in this example, the ratio in 25% compression hardness between the hollow-section fiber main region side and the solid-section fiber main region side was greater than or equal to 1.03, and the ratio in 40% compression hardness between the hollow-section fiber main region side and the solid-section fiber main region side was greater than or equal to 1.05, which were both large. Therefore, cushioning performance different between both faces was imparted. That is, the net-like structure obtained in this example was an excellent net-like structure that satisfied the requirements of the present invention, was small in difference in compression durability between both faces, and was provided with cushioning performance different between both faces.

[Example II-2]

A net-like structure was obtained in the same manner as in Example II-1 except that cooling water was provided at a position 38 cm below the nozzle face. The obtained net-like structure was a net-like structure having a solid-section fiber main region mainly including solid-section fibers, a hollow-section fiber main region mainly including hollow-section fibers, and a mixed region including solid-section fibers and hollow-section fibers in a mixed state, located between the solid-section fiber main region and the hollow-section fiber main region, where these regions were integrated, not separated from one another. The hollow-section fibers were formed of hollow linear bodies having a triangular rice-ball shaped hollow cross section, a hollowness of 28%, and a fiber size of 1.00 mm, and the solid-section fibers were formed of solid linear bodies having a fiber size of 0.47 mm. The difference in fiber size was 0.53 mm, the total weight ratio of the solid-section fibers was 37%, the apparent density was 0.045 g/cm$^3$, and the thickness of flattened surface was 43 mm.

The hollow-section fiber main region-side residual strain was 11.6%, the solid-section fiber main region-side residual strain was 13.0%, and the difference between the solid-section fiber main region-side residual strain and the hollow-section fiber main region-side residual strain was 1.4 points. The 25% compression hardness at pressurization from the hollow-section fiber main region side was 15.3 N/$\phi$100mm, the 25% compression hardness at pressurization from the solid-section fiber main region side was 9.7 N/$\phi$100mm, the ratio between the 25% compression hardness at pressurization from the solid-section fiber main region side and the 25% compression hardness at pressurization from the hollow-section fiber main region side was 1.58, the 40% compression hardness at pressurization from the hollow-section fiber main region side was 28.5 N/$\phi$100mm, the 40% compression hardness at pressurization from the solid-section fiber main region side was 23.7 N/$\phi$100mm, the ratio between the 40% compression hardness at pressurization from the solid-section fiber main region side and the 40% compression hardness at pressurization from the hollow-section fiber main region side was 1.20, the compression deflection coefficient at pressurization from the hollow-section fiber main region side was 4.29, the compression deflection coefficient at pressurization from the solid-section fiber main region side was 6.30, the difference between the compression deflection coefficient at pressurization from the solid-section fiber main region side and the compression deflection coefficient at pressurization from the hollow-section fiber main region side was 2.01, the hysteresis loss at pressurization from the hollow-section fiber main region side was 42.5%, the hysteresis loss at pressurization from the solid-section fiber main region side was 46.2%, and the difference between the hysteresis loss at pressurization from the solid-section fiber main region side and the hysteresis loss at pressurization from the hollow-section fiber main region side was 3.7 points. The properties of the obtained net-like structure are shown in Table 2.

As shown in Table 2, in the net-like structure obtained in this example, the residual strains after 750 N constant load repeated compression on the hollow-section fiber main region side and the solid-section fiber main region side were less than or equal to 20% with the difference therebetween being less than or equal to 10 points, the difference in compression deflection coefficient between the hollow-section fiber main region side and the solid-section fiber main region side was less than or equal to 5, and the hysteresis losses on the hollow-section fiber main region side and the solid-section fiber main region side were less than or equal to 60% with the difference therebetween being less than or equal to 5 points, which were all small. Therefore, the difference in compression durability between both faces was small. Also, in the net-like structure obtained in this example, the ratio in 25% compression hardness between the hollow-section fiber main region side and the solid-section fiber main region side was greater than or equal to 1.03, and the ratio in 40% compression hardness between the hollow-section fiber main region side and the solid-section fiber main region side was greater than or equal to 1.05, which were both large. Therefore, cushioning performance different between both faces was imparted. That is, the net-like structure obtained in this example was an excellent net-like structure that satisfied the requirements of the present invention, was small in difference in compression durability between both faces, and was provided with cushioning performance different between both faces.

[Example II-3]

As a nozzle, used was one having a nozzle effective face having lengths of 50 cm in the width direction and 67.6 mm in the thickness direction, on which triple bridge hollow forming orifices having an outer size of 3 mm and an inner size of 2.6 mm were zigzag-arranged in the first to seventh rows in the thickness direction at a width-direction inter-hole pitch of 6 mm and a thickness-direction inter-hole pitch of 5.2 mm and solid forming orifices having an outer size of 1 mm were zigzag-arranged in the eighth to fourteenth rows in the thickness direction at a width-direction inter-hole pitch of 6 mm and a thickness-direction inter-hole pitch of 5.2 mm. INFUSE D9530.05 (manufactured by Dow Chemical Company), a multi-block copolymer constituted of ethylene-$\alpha$-olefin, 100 wt%, was used as a polyolefin-based thermoplastic elastomer, discharged downward from the nozzle at a spinning temperature (melting temperature) of 240°C at a single-hole discharge rate of 1.8 g/min for hollow holes and a single-hole discharge rate of 1.1 g/min for solid holes. Cooling water was provided at a position 30 cm below the nozzle face. Endless nets made of stainless steel each having a width of 60 cm were placed in parallel at a spacing of 40 mm in opening width to form a pair of take-up conveyor nets so as to be partially exposed over a water surface. Above the conveyer nets over the water surface, the discharged filaments in a molten state were curled to form loops, and contact portions were fused together to form a three-dimensional net-like structure. The net-like structure in a molten state was sandwiched at both faces by the take-up conveyor nets, and drawn into the cooling water at a take-up speed of 1.84 m/min, thereby solidified to be flattened at both faces in the thickness direction, then cut into a predetermined size, and dried/heated with 70°C hot air for 15 minutes, to obtain a net-like structure.

The obtained net-like structure was a net-like structure having a solid-section fiber main region mainly including solid-section fibers, a hollow-section fiber main region mainly including hollow-section fibers, and a mixed region including solid-section fibers and hollow-section fibers in a mixed state, located between the solid-section fiber main region and the hollow-section fiber main region, where these regions were integrated, not separated from one another. The hollow-section fibers were formed of hollow linear bodies having a triangular rice-ball shaped hollow cross section, a hollowness of 29%, and a fiber size of 1.14 mm, and the solid-section fibers were formed of solid linear bodies having a fiber size of 0.57 mm. The difference in fiber size was 0.57 mm, the total weight ratio of the solid-section fibers was 37%, the apparent density was 0.052 g/cm$^3$, and the thickness of flattened surface was 32 mm.

The hollow-section fiber main region-side residual strain was 12.2%, the solid-section fiber main region-side residual strain was 13.9%, and the difference between the solid-section fiber main region-side residual strain and the hollow-section fiber main region-side residual strain was 1.7 points. The 25% compression hardness at pressurization from the hollow-section fiber main region side was 7.7 N/$\phi$100mm, the 25% compression hardness at pressurization from the solid-section fiber main region side was 6.5 N/$\phi$100mm, the ratio between the 25% compression hardness at pressurization from the solid-section fiber main region side and the 25% compression hardness at pressurization from the hollow-section fiber main region side was 1.18, the 40% compression hardness at pressurization from the hollow-section fiber main region side was 19.3 N/$\phi$100mm, the 40% compression hardness at pressurization from the solid-section fiber main region side was 16.8 N/$\phi$100mm, the ratio between the 40% compression hardness at pressurization from the solid-section fiber main region side and the 40% compression hardness at pressurization from the hollow-section fiber main region side was 1.15, the compression deflection coefficient at pressurization from the hollow-section fiber main region side was 9.44, the compression deflection coefficient at pressurization from the solid-section fiber main region side was 9.61, the difference between the compression deflection coefficient at pressurization from the solid-section fiber main region side and the compression deflection coefficient at pressurization from the hollow-section fiber main region side was 0.17, the hysteresis loss at pressurization from the hollow-section fiber main region side was 43.4%, the hysteresis loss at pressurization from the solid-section fiber main region side was 47.2%, and the difference between the hysteresis loss at pressurization from the solid-section fiber main region side and the hysteresis loss at pressurization from the hollow-section fiber main region side was 3.8 points. The properties of the obtained net-like structure are shown in Table 2.

As shown in Table 2, in the net-like structure obtained in this example, the residual strains after 750 N constant load repeated compression on the hollow-section fiber main region side and the solid-section fiber main region side were less than or equal to 20% with the difference therebetween being less than or equal to 10 points, the difference in compression deflection coefficient between the hollow-section fiber main region side and the solid-section fiber main region side was less than or equal to 5, and the hysteresis losses on the hollow-section fiber main region side and the solid-section fiber main region side were less than or equal to 60% with the difference therebetween being less than or equal to 5 points, which were all small. Therefore, the difference in compression durability between both faces was small. Also, in the net-like structure obtained in this example, the ratio in 25% compression hardness between the hollow-section fiber main region side and the solid-section fiber main region side was greater than or equal to 1.03, and the ratio in 40% compression hardness between the hollow-section fiber main region side and the solid-section fiber main region side was greater than or equal to 1.05, which were both large. Therefore, cushioning performance different between both faces was imparted. That is, the net-like structure obtained in this example was an excellent net-like structure that satisfied the requirements of the present invention, was small in difference in compression durability between both faces, and was provided with cushioning performance different between both faces.

[Example II-4]

As a nozzle, used was one having a nozzle effective face having lengths of 50 cm in the width direction and 77.9 mm in the thickness direction, on which triple bridge hollow forming orifices having an outer size of 3 mm and an inner size of 2.6 mm were zigzag-arranged in the first to tenth rows in the thickness direction at a width-direction inter-hole pitch of 6 mm and a thickness-direction inter-hole pitch of 5.2 mm and solid forming orifices having an outer size of 1 mm were zigzag-arranged in the eleventh to sixteenth rows in the thickness direction at a width-direction inter-hole pitch of 6 mm and a thickness-direction inter-hole pitch of 5.2 mm. DOWLEX 2035G (manufactured by Dow Chemical Company), a random block copolymer constituted of ethylene-$\alpha$-olefin, 100 wt%, was used as a polyolefin-based thermoplastic elastomer (B-2), discharged downward from the nozzle at a spinning temperature (melting temperature) of 230°C at a single-hole discharge rate of 1.3 g/min for hollow holes and a single-hole discharge rate of 0.8 g/min for solid holes. Cooling water was provided at a position 32 cm below the nozzle face. Endless nets made of stainless steel each having a width of 60 cm were placed in parallel at a spacing of 60 mm in opening width to form a pair of take-up conveyor nets so as to be partially exposed over a water surface. Above the conveyer nets over the water surface, the discharged filaments in a molten state were curled to form loops, and contact portions were fused together to form a three-dimensional net-like structure. The net-like structure in a molten state was sandwiched at both faces by the take-up conveyor nets, and drawn into the cooling water at a take-up speed of 1.54 m/min, thereby solidified to be flattened at both faces in the thickness direction, then cut into a predetermined size, and dried/heated with 70°C hot air for 15 minutes, to obtain a net-like structure.

The obtained net-like structure was a net-like structure having a solid-section fiber main region mainly including solid-section fibers, a hollow-section fiber main region mainly including hollow-section fibers, and a mixed region including solid-section fibers and hollow-section fibers in a mixed state, located between the solid-section fiber main region and the hollow-section fiber main region, where these regions were integrated, not separated from one another. The hollow-section fibers were formed of hollow linear bodies having a triangular rice-ball shaped hollow cross section, a hollowness of 33%, and a fiber size of 0.88 mm, and the solid-section fibers were formed of solid linear bodies having a fiber size of 0.49 mm. The difference in fiber size was 0.39 mm, the total weight ratio of the solid-section fibers was 38%, the apparent density was 0.032 g/cm$^3$, and the thickness of flattened surface was 56 mm.

The hollow-section fiber main region-side residual strain was 15.1%, the solid-section fiber main region-side residual strain was 15.5%, and the difference between the solid-section fiber main region-side residual strain and the hollow-section fiber main region-side residual strain was 0.4 points. The 25% compression hardness at pressurization from the hollow-section fiber main region side was 23.0 N/$\phi$100mm, the 25% compression hardness at pressurization from the solid-section fiber main region side was 17.0N/$\phi$100mm, the ratio between the 25% compression hardness at pressurization from the solid-section fiber main region side and the 25% compression hardness at pressurization from the hollow-section fiber main region side was 1.35, the 40% compression hardness at pressurization from the hollow-section fiber main region side was 40.4 N/$\phi$100mm, the 40% compression hardness at pressurization from the solid-section fiber main region side was 36.3 N/$\phi$100mm, the ratio between the 40% compression hardness at pressurization from the solid-section fiber main region side and the 40% compression hardness at pressurization from the hollow-section fiber main region side was 1.11, the compression deflection coefficient at pressurization from the hollow-section fiber main region side was 3.50, the compression deflection coefficient at pressurization from the solid-section fiber main region side was 5.01, the difference between the compression deflection coefficient at pressurization from the solid-section fiber main region side and the compression deflection coefficient at pressurization from the hollow-section fiber main region side was 1.51, the hysteresis loss at pressurization from the hollow-section fiber main region side was 39.7%, the hysteresis loss at pressurization from the solid-section fiber main region side was 43.6%, and the difference between the hysteresis loss at pressurization from the solid-section fiber main region side and the hysteresis loss at pressurization from the hollow-section fiber main region side was 3.9 points. The properties of the obtained net-like structure are shown in Table 2.

As shown in Table 2, in the net-like structure obtained in this example, the residual strains after 750 N constant load repeated compression on the hollow-section fiber main region side and the solid-section fiber main region side were less than or equal to 20% with the difference therebetween being less than or equal to 10 points, the difference in compression deflection coefficient between the hollow-section fiber main region side and the solid-section fiber main region side was less than or equal to 5, and the hysteresis losses on the hollow-section fiber main region side and the solid-section fiber main region side were less than or equal to 60% with the difference therebetween being less than or equal to 5 points, which were all small. Therefore, the difference in compression durability between both faces was small. Also, in the net-like structure obtained in this example, the ratio in 25% compression hardness between the hollow-section fiber main region side and the solid-section fiber main region side was greater than or equal to 1.03, and the ratio in 40% compression hardness between the hollow-section fiber main region side and the solid-section fiber main region side was greater than or equal to 1.05, which were both large. Therefore, cushioning performance different between both faces was imparted. That is, the net-like structure obtained in this example was an excellent net-like structure that satisfied the requirements of the present invention, was small in difference in compression durability between both faces, and was provided with cushioning performance different between both faces.

[Comparative Example II-R1]

As a nozzle, used was one having a nozzle effective face having lengths of 50 cm in the width direction and 31.2 mm in the thickness direction, on which triple bridge hollow forming orifices having an outer size of 3 mm and an inner size of 2.6 mm were zigzag-arranged in 7 rows in the thickness direction at a width-direction inter-hole pitch of 6 mm and a thickness-direction inter-hole pitch of 5.2 mm. INFUSE D9530.05 (manufactured by Dow Chemical Company), a multi-block copolymer constituted of ethylene-$\alpha$-olefin, 100 wt%, was used as a polyolefin-based thermoplastic elastomer, discharged downward from the nozzle at a spinning temperature (melting temperature) of 240°C at a single-hole discharge rate of 1.8 g/min. Cooling water was provided at a position 38 cm below the nozzle face. Endless nets made of stainless steel each having a width of 60 cm were placed in parallel at a spacing of 30 mm in opening width to form a pair of take-up conveyor nets so as to be partially exposed over a water surface. Above the conveyer nets over the water surface, the discharged filaments in a molten state were curled to form loops, and contact portions were fused together to form a three-dimensional net-like structure. The net-like structure in a molten state was sandwiched at both faces by the take-up conveyor nets, and drawn into the cooling water at a take-up speed of 1.43 m/min, thereby solidified to be flattened at both faces in the thickness direction, then cut into a predetermined size, and dried/heated with 70°C hot air for 15 minutes, to obtain a net-like structure mainly including hollow-section fibers having a triangular rice-ball shaped cross section. The obtained net-like structure had an apparent density of 0.048 g/cm³ and a thickness of flattened surface of 25 mm, and the hollow-section fibers had a hollowness of 30% and a fiber size of 1.00 mm.

As a nozzle, used was one having a nozzle effective face having lengths of 50 cm in the width direction and 31.2 mm in the thickness direction, on which solid forming orifices having an outer size of 1 mm were zigzag-arranged in 7 rows in the thickness direction at a width-direction inter-hole pitch of 6 mm and a thickness-direction inter-hole pitch of 5.2 mm. INFUSE D9530.05 (manufactured by Dow Chemical Company), a multi-block copolymer constituted of ethylene-$\alpha$-olefin, 100 wt%, was used as a polyolefin-based thermoplastic elastomer, discharged downward from the nozzle at a spinning temperature (melting temperature) of 240°C at a single-hole discharge rate of 1.1 g/min. Cooling water was provided at a position 38 cm below the nozzle face. Endless nets made of stainless steel each having a width of 60 cm were placed in parallel at a spacing of 25 mm in opening width to form a pair of take-up conveyor nets so as to be partially exposed over a water surface. Above the conveyer nets over the water surface, the discharged filaments in a molten state were curled to form loops, and contact portions were fused together to form a three-dimensional net-like structure. The net-like structure in a molten state was sandwiched at both faces by the take-up conveyor nets, and drawn into the cooling water at a take-up speed of 1.43 m/min, thereby solidified to be flattened at both faces in the thickness direction, then cut into a predetermined size, and dried/heated with 70°C hot air for 15 minutes, to obtain a net-like structure mainly including solid-section fibers. The obtained net-like structure had an apparent density of 0.037 g/cm³ and a thickness of flattened surface of 20 mm, and the solid-section fibers had a fiber size of 0.45 mm.

The obtained net-like structure mainly including solid-section fibers and the net-like structure mainly including solid-section fibers were stacked on each other, to form a net-like structure. The entire stacked net-like structure had an apparent density of 0.043 g/cm³ and a thickness of 45 mm. The difference between the fiber size of the hollow-section fibers and the fiber size of the solid-section fibers was 0.55 mm.

In the stacked net-like structure, the hollow-section fiber main region-side residual strain was 11.2%, the solid-section fiber main region-side residual strain was 28.5%, and the difference between the solid-section fiber main region-side residual strain and the hollow-section fiber main region-side residual strain was 17.3 points. The 25% compression hardness at pressurization from the hollow-section fiber main region side was 8.8 N/$\phi$100mm, the 25% compression hardness at pressurization from the solid-section fiber main region side was 4.4 N/$\phi$100mm, the ratio between the 25% compression hardness at pressurization from the solid-section fiber main region side and the 25% compression hardness at pressurization from the hollow-section fiber main region side was 2.00, the 40% compression hardness at pressurization from the hollow-section fiber main region side was 20.8 N/$\phi$100mm, the 40% compression hardness at pressurization from the solid-section fiber main region side was 13.4 N/$\phi$100mm, the ratio between the 40% compression hardness at pressurization from the solid-section fiber main region side and the 40% compression hardness at pressurization from the hollow-section fiber main region side was 1.55, the compression deflection coefficient at pressurization from the hollow-section fiber main region side was 7.87, the compression deflection coefficient at pressurization from the solid-section fiber main region side was 11.8, the difference between the compression deflection coefficient at pressurization from the solid-section fiber main region side and the compression deflection coefficient at pressurization from the hollow-section fiber main region side was 3.93 points, the hysteresis loss at pressurization from the hollow-section fiber main region side was 47.4%, the hysteresis loss at pressurization from the solid-section fiber main region side was 48.1%, and the difference between the hysteresis loss at pressurization from the solid-section fiber main region side and the hysteresis loss at pressurization from the hollow-section fiber main region side was 0.7 points. The properties of the obtained net-like structure are shown in Table 2.

As shown in Table 2, in the net-like structure obtained in this comparative example, after repeated compression with a constant load of 750 N on the hollow-section fiber main region side and the solid-section fiber main region side, the residual strain on the solid-section fiber main region side was greater than 20%, and the difference between the residual strain on the solid-section fiber main region side and the residual strain on the hollow-section fiber main region side was greater than 10 points. Therefore, the difference in compression durability between both faces was large. That is, the net-like structure obtained in this comparative example was a net-like structure that did not satisfy the requirements of the present invention and was large in difference in compression durability between both faces.

[Table 2]

| | | | Example II-1 | Example II-2 | Example II-3 | Example II-4 | Comparative Example II-R1 |
|---|---|---|---|---|---|---|---|
| Thermoplastic elastomer | | | (B-1) | (B-1) | (B-1) | (B-2) I | (B-1) |
| Spinning temperature | | (°C) | 240 | 240 | 240 | 230 | 240 |
| Single-hole discharge rate | Hollow holes | (g/min) | 1.8 | 1.8 | 1.8 | 1.3 | 1.8 |
| | Solid holes | (g/min) | 1.1 | 1.1 | 1.1 | 0.8 | 1.1 |
| Nozzle face-cooling water distance | | (cm) | 30 | 38 | 30 | 32 | 38 |
| Take-up speed | | (m/min) | 1.43 | 1.43 | 1.84 | 1.54 | 1.43 |
| Fiber size | Hollow-section fibers | (mm) | 1.13 | 1.00 | 1.14 | 0.88 | 1.00 |
| | Solid-section fibers | (mm) | 0.52 | 0.47 | 0.57 | 0.49 | 0.45 |
| | Difference in fiber size | (mm) | 0.61 | 0.53 | 0.57 | 0.39 | 0.55 |
| Hollowness of hollow-section fibers | | (%) | 30 | 28 | 29 | 33 | 30 |
| Total weight ratio of solid-section fibers | | (%) | 37 | 37 | 37 | 38 | - |
| Apparent density | | (g/cm$^3$) | 0.043 | 0.045 | 0.052 | 0.032 | 0.043*1 |
| Thickness | | (mm) | 45 | 43 | 32 | 56 | 45*1 |
| Residual strain after 750N constant load repeated compression | Hollow-section fiber main region side | (%) | 11.4 | 11.6 | 12.2 | 15.1 | 11.2 |
| | Solid-section fiber main region side | (%) | 13.5 | 13.0 | 13.9 | 15.5 | 28.5 |
| | Difference between two sides | (Point) | 2.1 | 1.4 | 1.7 | 0.4 | 17.3 |
| 25% compression hardness | Hollow-section fiber main region side | (N/$\phi$100 mm) | 11.0 | 15.3 | 7.7 | 23.0 | 8.8 |
| | Solid-section fiber main region side | (N/$\phi$100 mm) | 6.2 | 9.7 | 6.5 | 17.0 | 4.4 |
| | Ratio between two sides | (-) | 1.77 | 1.58 | 1.18 | 1.35 | 2.00 |

(continued)

|  |  |  | Example II-1 | Example II-2 | Example II-3 | Example II-4 | Comparative Example II-R1 |
|---|---|---|---|---|---|---|---|
| 40% compression hardness | Hollow-section fiber main region side | (N/$\phi$100 mm) | 22.2 | 28.5 | 19.3 | 40.4 | 20.8 |
|  | Solid-section fiber main region side | (N/$\phi$100 mm | 19.1 | 23.7 | 16.8 | 36.3 | 13.4 |
|  | Ratio between two sides | (-) | 1.16 | 1.20 | 1.15 | 1.11 | 1.55 |
| Compression deflection coefficient | Hollow-section fiber main region side | (-) | 4.63 | 4.29 | 9.44 | 3.50 | 7.87 |
|  | Solid-section fiber main region side | (-) | 7.59 | 6.30 | 9.61 | 5.01 | 11.8 |
|  | Difference between two sides | (-) | 2.96 | 2.01 | 0.17 | 1.51 | 3.93 |
| Hysteresis loss | Hollow-section fiber main region side | (%) | 42.6 | 42.5 | 43.4 | 39.7 | 47.4 |
|  | Solid-section fiber main region side | (%) | 44.8 | 46.2 | 47.2 | 43.6 | 48.1 |
|  | Difference between two sides | (Point) | 2.2 | 3.7 | 3.8 | 3.9 | 0.7 |
| *1: Value in the state of stacking of 2 net-like structures | | | | | | | |

It is to be understood that the embodiments and examples disclosed herein are illustrative and not restrictive in every respect. The scope of the present invention should be defined by the appended claims rather than by the description detailed above, and all changes that fall within the meaning and scope equivalent to the claims are intended to be embraced by the claims.

The net-like structure of the present invention has been obtained by improving the problems, which have been problems of conventional complex molded products made of a net-like structure and another net-like structure, a net-like structure and hard cotton, a net-like structure and urethane, etc., that the compression durability is different between the case of use from one of two faces and the case of use from the other face, that the manufacturing cost is high, that the hardness changes with the amount of an adhesive applied if applied, causing a feeling of strangeness, and that recycling is cumbersome, without impairing the comfort to sit on and air permeability conventionally possessed by the net-like structure. Therefore, the present invention can provide a net-like structure having high added value by imparting cushioning feeling different between both faces, which is suitable for cushion materials used for office chairs, furniture, sofas, beddings such as beds, seats for vehicles such as trains, automobiles, two-wheeled vehicles, baby buggies, and child safety seats, shock-absorbing mats such as floor mats and members for preventing collision and nipping, etc. The present invention therefore greatly contributes to the industrial world.

**Claims**

1. A net-like structure having a three-dimensional random loop bonded structure constituted of a thermoplastic elastomer continuous linear body that is either a polyester-based thermoplastic elastomer continuous linear body or a polyolefin-based thermoplastic elastomer continuous linear body having a fiber size of greater than or equal to 0.1 mm and less than or equal to 3.0 mm,
   wherein
   the net-like structure has, in a thickness direction of said net-like structure, a solid-section fiber main region mainly including fibers having a solid cross section, a hollow-section fiber main region mainly including fibers having a hollow cross section, and a mixed region including fibers having a solid cross section and fibers having a hollow cross section in a mixed state, located between said solid-section fiber main region and said hollow-section fiber main region, wherein in the solid-section fiber main region and the hollow-section fiber main region, the percentage of the number of fibers having the cross section in question in the total number of fibers included in the region in question is greater than or equal to 90%,
   both solid-section fiber main region-side residual strain after 750 N constant load repeated compression at pressurization from the side of said solid-section fiber main region of said net-like structure and hollow-section fiber main region-side residual strain after 750 N constant load repeated compression at pressurization from the side of said hollow-section fiber main region of said net-like structure are less than or equal to 20%, as measured in accordance with the method specified in the description, and
   a difference between said solid-section fiber main region-side residual strain and said hollow-section fiber main region-side residual strain is less than or equal to 10 points, as measured in accordance with the method specified in the description.

2. The net-like structure according to claim 1, wherein an apparent density is greater than or equal to 0.005 g/cm$^3$ and less than or equal to 0.20 g/cm$^3$, as measured in accordance with the method specified in the description.

3. The net-like structure according to claim 1 or 2, wherein said fibers having a hollow cross section have a fiber size greater than said fibers having a solid cross section, and a difference in fiber size between said fibers having a solid cross section and said fibers having a hollow cross section is greater than or equal to 0.07 mm.

4. The net-like structure according to any one of claims 1 to 3, wherein a ratio between 25% compression hardness at pressurization from the side of said solid-section fiber main region and 25% compression hardness at pressurization from the side of said hollow-section fiber main region is greater than or equal to 1.03, as measured in accordance with the method specified in the description.

5. The net-like structure according to any one of claims 1 to 4, wherein a ratio between 40% compression hardness at pressurization from the side of said solid-section fiber main region and 40% compression hardness at pressurization from the side of said hollow-section fiber main region is greater than or equal to 1.05, as measured in accordance with the method specified in the description.

6. The net-like structure according to any one of claims 1 to 5, wherein a difference between a compression deflection coefficient at pressurization from the side of said solid-section fiber main region and a compression deflection coefficient at pressurization from the side of said hollow-section fiber main region is less than or equal to 5, as measured in accordance with the method specified in the description.

7. The net-like structure according to any one of claims 1 to 6, wherein a difference between a hysteresis loss at pressurization from the side of said solid-section fiber main region and a hysteresis loss at pressurization from the side of said hollow-section fiber main region is less than or equal to 5 points, as measured in accordance with the method specified in the description.

8. The net-like structure according to any one of claims 1 to 7, wherein said thermoplastic elastomer continuous linear body is said polyester-based thermoplastic elastomer continuous linear body, and
   both a hysteresis loss at pressurization from the side of said solid-section fiber main region and a hysteresis loss at pressurization from the side of said hollow-section fiber main region are less than or equal to 30%, as measured in accordance with the method specified in the description.

9. The net-like structure according to any one of claims 1 to 7, wherein said thermoplastic elastomer continuous linear body is said polyolefin-based thermoplastic elastomer continuous linear body, and

both a hysteresis loss at pressurization from the side of said solid-section fiber main region and a hysteresis loss at pressurization from the side of said hollow-section fiber main region are less than or equal to 60%, as measured in accordance with the method specified in the description.

10. A cushion material including the net-like structure according to any one of claims 1 to 9 inside the cushion, wherein the cushion material is usable reversibly.

**Patentansprüche**

1. Netzartige Struktur mit einer dreidimensionalen zufälligen schlaufengebundenen Struktur, gebildet aus einem kontinuierlichen linearen Körper aus thermoplastischem Elastomer, welcher entweder ein kontinuierlicher linearer Körper aus thermoplastischem Elastomer auf Polyester-Basis oder ein kontinuierlicher linearer Körper aus thermoplastischem Elastomer auf Polyolefin-Basis mit einer Fasergröße von mehr als oder gleich 0,1 mm und weniger als oder gleich 3,0 mm ist,
wobei
die netzartige Struktur in einer Dickenrichtung der netzartigen Struktur einen Hauptbereich von Vollquerschnittsfasern, welcher hauptsächlich Fasern mit einem Vollquerschnitt einschließt, einen Hauptbereich von Hohlquerschnittsfasern, welcher hauptsächlich Fasern mit einem Hohlquerschnitt einschließt, und einen gemischten Bereich, welcher Fasern mit einem Vollquerschnitt und Fasern mit einem Hohlquerschnitt in einem gemischten Zustand einschließt, angeordnet zwischen dem Hauptbereich von Vollquerschnittsfasern und dem Hauptbereich von Hohlquerschnittsfasern, aufweist, wobei in dem Hauptbereich von Vollquerschnittsfasern und dem Hauptbereich von Hohlquerschnittsfasern der prozentuale Anteil der Anzahl von Fasern mit dem fraglichen Querschnitt in Bezug auf die Gesamtanzahl von in dem fraglichen Bereich eingeschlossenen Fasern mehr als oder gleich 90% beträgt,
sowohl die Restdehnung auf der Seite des Hauptbereichs von Vollquerschnittsfasern nach wiederholter Stauchung mit konstanter Belastung von 750 N bei Druckbeaufschlagung von der Seite des Hauptbereichs von Vollquerschnittsfasern der netzartigen Struktur als auch die Restdehnung auf der Seite des Hauptbereichs von Hohlquerschnittsfasern nach wiederholter Stauchung mit konstanter Belastung von 750 N bei Druckbeaufschlagung von der Seite des Hauptbereichs von Hohlquerschnittsfasern der netzartigen Struktur weniger als oder gleich 20% betragen, gemessen in Übereinstimmung mit dem in der Beschreibung angegebenen Verfahren, und
ein Unterschied zwischen der Restdehnung auf der Seite des Hauptbereichs von Vollquerschnittsfasern und der Restdehnung auf der Seite des Hauptbereichs von Hohlquerschnittsfasern weniger als oder gleich 10 Punkte beträgt, gemessen in Übereinstimmung mit dem in der Beschreibung angegebenen Verfahren.

2. Netzartige Struktur nach Anspruch 1, wobei eine scheinbare Dichte mehr als oder gleich 0,005 g/cm³ und weniger als oder gleich 0,20 g/cm³ beträgt, gemessen in Übereinstimmung mit dem in der Beschreibung angegebenen Verfahren.

3. Netzartige Struktur nach Anspruch 1 oder 2, wobei die Fasern mit einem Hohlquerschnitt eine Fasergröße, welche größer ist als die Fasern mit einem Vollquerschnitt, aufweisen und ein Unterschied in der Fasergröße zwischen den Fasern mit einem Vollquerschnitt und den Fasern mit einem Hohlquerschnitt mehr als oder gleich 0,07 mm beträgt.

4. Netzartige Struktur nach einem der Ansprüche 1 bis 3, wobei ein Verhältnis zwischen einer 25%igen Stauchhärte bei Druckbeaufschlagung von der Seite des Hauptbereichs von Vollquerschnittsfasern und einer 25%igen Stauchhärte bei Druckbeaufschlagung von der Seite des Hauptbereichs von Hohlquerschnittsfasern mehr als oder gleich 1,03 beträgt, gemessen in Übereinstimmung mit dem in der Beschreibung angegebenen Verfahren.

5. Netzartige Struktur nach einem der Ansprüche 1 bis 4, wobei ein Verhältnis zwischen einer 40%igen Stauchhärte bei Druckbeaufschlagung von der Seite des Hauptbereichs von Vollquerschnittsfasern und einer 40%igen Stauchhärte bei Druckbeaufschlagung von der Seite des Hauptbereichs von Hohlquerschnittsfasern mehr als oder gleich 1,05 beträgt, gemessen in Übereinstimmung mit dem in der Beschreibung angegebenen Verfahren.

6. Netzartige Struktur nach einem der Ansprüche 1 bis 5, wobei ein Unterschied zwischen einem Stauchbiegungskoeffizienten bei Druckbeaufschlagung von der Seite des Hauptbereichs von Vollquerschnittsfasern und einem Stauchbiegungskoeffizienten bei Druckbeaufschlagung von der Seite des Hauptbereichs von Hohlquerschnittsfasern weniger als oder gleich 5 beträgt, gemessen in Übereinstimmung mit dem in der Beschreibung angegebenen Verfahren.

7. Netzartige Struktur nach einem der Ansprüche 1 bis 6, wobei ein Unterschied zwischen einem Hystereseverlust bei

EP 3 290 556 B1

Druckbeaufschlagung von der Seite des Hauptbereichs von Vollquerschnittsfasern und ein Hystereseverlust bei Druckbeaufschlagung von der Seite des Hauptbereichs von Hohlquerschnittsfasern weniger als oder gleich 5 Punkte beträgt, gemessen in Übereinstimmung mit dem in der Beschreibung angegebenen Verfahren.

8. Netzartige Struktur nach einem der Ansprüche 1 bis 7, wobei der kontinuierliche lineare Körper aus thermoplastischem Elastomer der kontinuierliche lineare Körper aus thermoplastischem Elastomer auf Polyester-Basis ist und sowohl ein Hystereseverlust bei Druckbeaufschlagung von der Seite des Hauptbereichs von Vollquerschnittsfasern als auch ein Hystereseverlust bei Druckbeaufschlagung von der Seite des Hauptbereichs von Hohlquerschnittsfasern weniger als oder gleich 30% betragen, gemessen in Übereinstimmung mit dem in der Beschreibung angegebenen Verfahren.

9. Netzartige Struktur nach einem der Ansprüche 1 bis 7, wobei der kontinuierliche lineare Körper aus thermoplastischem Elastomer der kontinuierliche lineare Körper aus thermoplastischem Elastomer auf Polyolefin-Basis ist und sowohl ein Hystereseverlust bei Druckbeaufschlagung von der Seite des Hauptbereichs von Vollquerschnittsfasern als auch ein Hystereseverlust bei Druckbeaufschlagung von der Seite des Hauptbereichs von Hohlquerschnittsfasern weniger als oder gleich 60% betragen, gemessen in Übereinstimmung mit dem in der Beschreibung angegebenen Verfahren.

10. Polstermaterial, einschließend die netzartige Struktur nach einem der Ansprüche 1 bis 9 innerhalb des Polsters, wobei das Polstermaterial zweiseitig verwendbar ist.


**Revendications**

1. Structure en réseau présentant une structure liée par boucles aléatoires tridimensionnelles, constituée d'un corps linéaire continu en élastomère thermoplastique qui est soit un corps linéaire continu en élastomère thermoplastique à base de polyester, soit un corps linéaire continu en élastomère thermoplastique à base de polyoléfine ayant une dimension de fibre supérieure ou égale à 0,1 mm et inférieure ou égale à 3,0 mm,
dans laquelle
la structure en réseau a, dans le sens de l'épaisseur de ladite structure en réseau, une zone principale de fibres à section pleine comprenant des fibres présentant une coupe transversale pleine, une zone principale de fibres à section creuse comprenant principalement des fibres ayant une coupe transversale creuse, et une zone mixte comprenant des fibres ayant une coupe transversale pleine et des fibres ayant une coupe transversale creuse dans un état mixte, située entre ladite zone principale de fibres à section pleine et ladite zone principale de fibres à section creuse, dans laquelle dans la zone principale de fibres à section pleine et la zone principale de fibres à section creuse, le pourcent du nombre de fibres ayant la coupe transversale en question dans le nombre total de fibres comprises dans la zone en question est supérieur ou égal à 90%,
à la fois la fatigue résiduelle côté zone principale de fibres à section pleine après compression répétée de charge constante de 750 N lors d'une mise sous pression depuis le côté de ladite zone principale de fibres à section pleine de ladite structure en réseau et la fatigue résiduelle côté zone principale de fibres à section creuse après compression répétée de charge constante de 750 N lors d'une mise sous pression depuis le côté de ladite zone principale de fibres à section creuse de ladite structure en réseau, sont inférieures ou égales à 20%, telles que mesurées selon la méthode spécifiée dans la description, et
la différence entre ladite fatigue résiduelle côté zone principale de fibres à section pleine et ladite fatigue résiduelle côté zone principale de fibres à section creuse, est inférieure ou égale à 10 points, telle que mesurée selon la méthode spécifiée dans la description.

2. Structure en réseau selon la revendication 1, dans laquelle la densité apparente est supérieure ou égale à 0,005 g/cm$^3$ et inférieure ou égale à 0,20 g/cm$^3$, telle que mesurée selon la méthode spécifiée dans la description.

3. Structure en réseau selon la revendication 1 ou 2, dans laquelle lesdites fibres ayant une coupe transversale creuse ont une dimension de fibre supérieure auxdites fibres ayant une coupe transversale pleine, et la différence en dimension de fibre entre lesdites fibres à la coupe transversale pleine et lesdites fibres à ladite coupe transversale creuse, est supérieure ou égale à 0,07 mm.

4. Structure en réseau selon l'une quelconque des revendications 1 à 3, dans laquelle le rapport entre une dureté à la compression de 25% lors d'une mise sous pression depuis le côté de ladite zone principale de fibres à coupe transversale pleine et une dureté à la compression de 25% lors d'une mise sous pression depuis le côté de ladite

36

zone principale de fibres à section creuse, est supérieur ou égal à 1,03, tel que mesuré selon la méthode spécifiée dans la description.

5. Structure en réseau selon l'une quelconque des revendications 1 à 4, dans laquelle le rapport entre une dureté à la compression de 40% lors d'une mise sous pression depuis le côté de ladite zone principale de fibres à coupe transversale pleine et une dureté à la compression de 40% lors d'une mise sous pression depuis le côté de ladite zone principale de fibres à section creuse, est supérieur ou égal à 1,05, tel que mesuré selon la méthode spécifiée dans la description.

6. Structure en réseau selon l'une quelconque des revendications 1 à 5, dans laquelle la différence entre un coefficient de flexion à la compression lors d'une mise sous pression depuis le côté de ladite zone principale de fibres à section pleine et un coefficient de flexion à la compression lors d'une mise sous pression depuis le côté de ladite zone principale de fibres à section creuse est inférieure ou égale à 5, telle que mesurée selon la méthode spécifiée dans la description.

7. Structure en réseau selon l'une quelconque des revendications 1 à 6, dans laquelle la différence entre une perte d'hystérésis lors d'une mise sous pression depuis le côté de ladite zone principale de fibres à section pleine et une perte d'hystérésis lors d'une mise sous pression depuis le côté de ladite zone principale de fibres à section creuse est inférieure ou égale à 5 points, telle que mesurée selon la méthode spécifiée dans la description.

8. Structure en réseau selon l'une quelconque des revendications 1 à 7, dans laquelle ledit corps linéaire continu en élastomère thermoplastique est ledit corps linéaire continu en élastomère thermoplastique à base de polyester, et à la fois une perte d'hystérésis lors d'une mise sous pression depuis le côté de ladite zone principale de fibres à section pleine et une perte d'hystérésis lors d'une mise sous pression depuis le côté de ladite zone principale de fibres à section creuse sont inférieures ou égales à 30%, telles que mesurées selon la méthode spécifiée dans la description.

9. Structure en réseau selon l'une quelconque des revendications 1 à 7, dans laquelle ledit corps linéaire continu en élastomère thermoplastique est ledit corps linéaire continu en élastomère thermoplastique à base de polyoléfine, et une perte d'hystérésis lors d'une mise sous pression depuis le côté de ladite zone principale de fibres à section pleine et une perte d'hystérésis lors d'une mise sous pression depuis le côté de ladite zone principale de fibres à section creuse sont inférieures ou égales à 60%, telles que mesurées selon la méthode spécifiée dans la description.

10. Matière de coussin comprenant la structure en réseau selon l'une quelconque des revendications 1 à 9 à l'intérieur du coussin, dans laquelle la matière de coussin peut être utilisée à l'endroit comme à l'envers.

FIG.1A

FIG.1B

FIG.1C

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H768061 B
- JP 2004244740 A
- JP H7189105 B
- EP 3064628 A1
- EP 3064627 A1
- EP 3255192 A1
- EP 2966206 A1
- EP 1665957 A1
- EP 1586687 A1
- JP 2014194099 A